**Europäisches Patentamt**

**European Patent Office**

**Office européen des brevets**

(11) Veröffentlichungsnummer: **0 048 909**

**B2**

(12) # NEUE EUROPÄISCHE PATENTSCHRIFT

(45) Veröffentlichungstag der neuen Patentschrift:
**29.06.88**

(21) Anmeldenummer: **81107425.1**

(22) Anmeldetag: **18.09.81**

(51) Int. Cl.⁴: **C 25 D 11/10, C 25 D 11/08, B 41 N 1/04, B 41 N 1/08**

(54) **Verfahren zur anodischen Oxidation von Aluminium und dessen Verwendung als Druckplatten-Trägermaterial.**

(30) Priorität: **26.09.80 US 188091**
**26.09.80 US 188092**

(43) Veröffentlichungstag der Anmeldung:
**07.04.82 Patentblatt 82/14**

(45) Bekanntmachung des Hinweises auf die Patenterteilung:
**23.01.85 Patentblatt 85/4**

(45) Bekanntmachung des Hinweises auf die Entscheidung über den Einspruch:
**29.06.88 Patentblatt 88/26**

(84) Benannte Vertragsstaaten:
**AT BE CH DE FR GB IT LI NL SE**

(56) Entgegenhaltungen:
**DE-A-1 496 722**
**DE-B-2 243 178**
**DE-B-2 713 985**
**DE-C-1 621 478**
**GB-A-1 027 695**
**US-A-2 918 416**
**US-A-4 022 670**

**Ullmann's Enzyklopädie der technischen Chemie, 3. Auflage, Band 11 (1960), S. 774-775**
**Römpp, Chemie-Lexikon, 6. Auflage (1966), S. 184**
**Galvanotechnik, 9. Auflage, Band II (1949/1950), S. 1074-1075**

**Die Akte enthält technische Angaben, die nach dem Eingang der Anmeldung eingereicht wurden und die nicht in dieser Patentschrift enthalten sind.**

(73) Patentinhaber: **HOECHST CELANESE CORPORATION, Route 202-206 North, Somerville, N.J. 08876 (US)**

(72) Erfinder: **Gillich, Thomas N., 3 Little Brook Rd., Whitehouse Station New Jersey 08889 (US)**
Erfinder: **Walls, John E., 46 Center Street, Annandale New Jersey 08801 (US)**
Erfinder: **Wanat, Stanley F., 3 Frances Lane, Scotch Plains New Jersey 07076 (US)**
Erfinder: **Rozell, William J., 1173 Mount Horeb Rd., Martinsville New Jersey 08836 (US)**

(74) Vertreter: **Euler, Kurt Emil, Dr., HOECHST AG - Werk KALLE Patentabteilung Postfach 3540 Rheingaustrasse 190, D-6200 Wiesbaden (DE)**

EP 0 048 909 B2

LIBER, STOCKHOLM 1988

**Beschreibung**

Die Erfindung betrifft ein Verfahren zur Herstellung von Druckplatten mit platten-, folien- oder bandförmigem Aluminium oder Aluminiumlegierungen als Trägermaterial.

Bei der Bearbeitung von Aluminium oder seinen Legierungen, beispielsweise in Form von Bändern Folien oder Platten, zeichnete sich in den letzten Jahrzehnten ein Trend zur steten Verbesserung der Aluminiumoberfläche ab, um diese für die unterschiedlichsten Anwendungsgebiete (z. B für architektonische Zwecke oder für die Herstellung von Druckplatten) vorzubereiten. Zu den verschiedensten Eigenschaften, die dabei in bezug auf die Oberfläche erzielt werden sollen, zählen beispielsweise: Korrosionsbeständigkeit, Aussehen, Dichte, Härte, Verschleißfestigkeit, Aufnahmefähigkeit und Haftung für Lack- oder Kunstharzüberzüge, Färbbarkeit, Glanz usw. Dabei verlief die Entwicklung von walzblankem Aluminium ausgehend über chemische, mechanische und elektrochemische Oberflächen-Behandlungsverfahren, wobei auch Kombinationen der verschiedenen Verfanren in der Praxis Anwendung finden.

Insbesondere bei der Bearbeitung von solchem band-, folien- oder plattenförmigen Material aus Aluminium oder seinen Legierungen, das als Trägermaterial für (Flachdruck-)Druckplatten Verwendung finden soll, hat sich als vorläufiger Abschluß der technischen Entwicklung die Kombination einer meist mechanischen oder elektrochemischen Aufrauhstufe mit einer nachfolgenden Behandlungsstufe durch anodische Oxidation der aufgerauhten Aluminiumoberfläche durchgesetzt. Es können jedoch auch - je nach gewünschter Druckauflage der behandelten Druckplatte - anodische Oxidationen auf solchen Aluminiummaterialien durchgeführt werden, die keiner separaten Aufrauhbehandlung unterworfen worden sind, sie müssen dann lediglich eine Oberfläche aufweisen, auf der eine genügend haftfeste Aluminiumoxidschicht durch die anodische Oxidation erzeugt werden kann, wobei diese ihrerseits eine gute Haftung für eine aufzubringende lichtempfindliche Schicht bieten sollte.

Anodische Schichten auf (Flachdruck-)Druckplatten, eignen sich vor allem zur besseren Führung des Feuchtwassers (= erhöhte Hydrophilie) und zur Erhöhung des Widerstandes gegen Abrieb und damit beispielsweise zur Verhinderung des Verlustes von druckenden Teilen auf der Oberfläche während des Druckvorganges und weisen außerdem beispielsweise eine erhöhte Haftfestigkeit gegenüber der lichtempfindlichen Schicht auf.

Aus dem Stand der Technik sind beispielsweise Standardmethoden zur anodischen Oxidation von Aluminium in $H_2SO_4$ enthaltenden wäßrigen Elektrolyten bekannt (s. dazu z. B. M. Schenk, Werkstoff Aluminium und seine anodische Oxydation, Francke Verlag - Bern, 1948, Seite 760; Praktische Galvanotechnik, Eugen G. Leuze Verlag - Saulgau, 1970, Seiten 395 ff. und Seiten 518/519; W. Hübner und C. T. Speiser, Die Praxis der anodischen Oxidation des Aluminiums, Aluminium Verlag - Düsseldorf, 1977, 3. Auflage, Seiten 137 ff.), wobei sich $H_2SO_4$ als die für die meisten Anwendungsgebiete brauchbarste Elektrolytsäure herausgestellt hat.

Auch andere Elektrolyte sind bereits aus dem Stand der Technik bekannt, dazu zählen beispielsweise:

Eine lithographische Druckplatte wird nach der DE-A 1 671 614 (= US-A 3 511 661) so hergestellt, daß ein Aluminiumträger in wäßriger Phosphorsäure anodisch oxidiert wird. Die Oberfläche ist nach der Oxidation aus Zellen aufgebaut, die Öffnungen mit einer Breite von 150 bis 750. · $10^{-10}$ m haben. Ein ähnliches Verfahren beschreiben auch die US-A3 594 289 oder die DE-A 2 507 386, wobei jedoch in der DE-A ausdrücklich eine Wechselspannung eingesetzt wird, auch Polyphosphorsäuren können im wäßrigen Elektrolyten vorhanden sein.

Daneben werden aber auch Zusätze oder mehrstufige Verfahren eingesetzt:

Druckplatten-Trägermaterialien werden gemäß der DE-B 1 471 707 (= US-A 3 181 461) so hergestellt, daß anodisch erzeugte Aluminiumoxidschichten noch mit Füllstoffen wie Silikaten, Bichromaten, Oxalaten oder Farbstoffen in wäßriger Lösung nachbehandelt werden. In der DE-C 1 621 478 (= US-A 4 153 461) wird für das gleiche Anwendungsgebiet Polyvinylphosphonsäure in wäßriger Lösung eingesetzt. Eine elektrochemische Silikatisierung von bereits anodisch oxidierten Druckplattenträgern aus Aluminium unter anodischen Bedingungen wird in der DE-A 2 532 769 (= US-A 3 902 976) beschrieben. Aus der US-A 2 918 416 ist ein Verfahren zur Anodisierung von Aluminium oder dessen Legierungen bekannt, wobei dem Elektrolyten, bestehend aus Schwefel-, Chrom, Phosphor- oder Oxalsäure, Mellithsäure zugesetzt wird. Die GB-A 1 027 695 beschreibt ein Vierstufenverfahren zur Behandlung von Aluminium oder dessen Legierungen, wobei in allen Stufen Sulfitablauge eingesetzt wird, die 1 bis 20 Gew.-% Lignin in Form von Ligninsulfonsäure enthält. Dieses Verfahren kann für die Herstellung von Druckplatten angewendet werden.

Nach der zunächst erfolgenden anodischen Oxidation von Aluminium wird gemäß der DE-B 2 520 955 ein wäßriges Bad zur elektrolytischen Einfärbung der Oxidschicht mit Wechselstrom angewendet, das farbgebende Metallsalze und Phosphonsäuren in einer Menge von 0,5 bis 200 g/l enthält. Zu den Phosphonsäuren zählen insbesondere aminosubstituierte Mono- oder Polyphosphonsäuren wie Aminomethanphosphonsäure, n-Propylamino-di(methanphosphonsäure) oder Hydrazin-tetra(methanphosphonsäure). Diese Verbindungen sollen als "Sperrschichtbildner" gegenüber dem bereits anodisch oxidierten Aluminium dienen, wozu sonst häufig Borsäure, Citronensäure oder Weinsäure ingesetzt werden.

Die bisher bekannten Verfahren auf der Basis von Schwefelsäure liefern zwar für viele Anwendungsgebiete brauchbare Oxidschichten auf Aluminium, weisen jedoch beispielsweise bei ihrer Anwendung für die Herstellung von Trägermaterialien für Druckplatten einige Nachteile auf. Dazu zählen einerseits die erhöhte Anfälligkeit der danach erzeugten Schichten gegen Alkali und die "Schleierbildung" und andererseits die insbesondere bei der "Hartanodisierung" aufzuwendende Energie zum Erreichen und Konstanthalten der niedrigen Elektrolyttemperaturen und die für die ökonomisch günstige kontinuierliche Anodisierung von Aluminium relativ hohen Verweilzeiten des Aluminiums im Elektrolyten. Auch der Phosphorsäure als alleinigem Elektrolyten oder in Mischungen kam bisher für großtechnisch brauchbare Anodisierverfahren keine oder nur eine untergeordnete Bedeutung zu. Das Schichtwachstum führt bei dieser Säure nur zu verhältnismäßig dünnen Schichten. Diese dünnen Schichten sind jedoch nicht so dicht, daß sie beispielsweise als Formierschichten für Kondensatoren mit z. B. aus Boraten oder Citronensäure erzeugten Schichten in Konkurrenz treten könnten (s. dazu M. Schenk, Werkstoff Aluminium und seine anodische Oxydation, Francke Verlag Bern, 1948, Seite 324). Das starke Rücklösevermögen von Phosphorsäure für Aluminiumoxid bietet nicht nur eine mögliche Erklärung für dieses Verhalten (M. Schenk, Seite 385), sondern auch dafür, daß dickere und auch abriebfeste Oxidschichten unter wirtschaftlich vertretbaren Bedingungen nicht oder nur unter erschwerten Bedingungen herzustellen sind. Auf dieses Rücklösevermögen ist wahrscheinlich auch die großporige Struktur der in Phosphorsäure hergestellten Oxidschichten (M. Schenk, Seite 585) und die geringe Abriebfestigkeit dieser Schichten zurückzuführen.

Die anodischen Oxidschichten auf Aluminium können zwei Haupttypen angehören. Es gibt einerseits die sogenannte Sperrschicht, die entsteht, wenn der beim Anodisieren verwendete Elektrolyt nur ein geringes Lösevermögen für das Oxid hat. Solche Schichten sind im wesentlichen nicht porös, und ihre Dicke ist auf etwa $13 \cdot 10^{-10}$ m/Volt beschränkt. Sobald diese begrenzende Dicke erreicht ist, besteht im allgemeinen eine wirksame Sperre gegen den weiteren Ionen- oder Elektronenfluß. Der Strom fällt bis auf einen niedrigen Leitfähigkeitswert ab, und die Oxidschichtbildung hört auf. Als Elektrolyten für dieses Verfahren dienen beispielsweise Borsäure und Weinsäure.

Wenn der Elektrolyt andererseits eine ausreichende Lösewirkung auf das Oxid ausübt, erreicht die Sperrschicht nicht ihre Grenzdicke, d. h. der Strom kann weiterfließen und seine Wirkung führt zu einer "porösen" Oxidstruktur.

Poröse Schichten können ziemlich, d. h. einige $10^{-7}$ m dick werden, wobei jedoch an der Grenzfläche Metall/Metalloxid immer eine dünne Oxidsperrschicht bestehen bleibt. Untersuchungen mit dem Elektronenmikroskop zeigen, daß durch die gesamte Oxidschicht hindurch Milliarden von dichtgepackten Zellen aus amorphem Oxid vorhanden sind, die im allgemeinen senkrecht zur Metall/Metalloxid-Grenzfläche ausgerichtet sind. Schwefelsäure ist in diesen Fällen der gebräuchlichste Elektrolyt, aber auch Phosphorsäure wird verwendet. Anodisch erzeugte Schichten aus Aluminiumoxid sind härter als an der Luft oxidierte Oberflächenschichten.

Nach den verschiedensten der oben beschriebenen Verfahren hergestelltes anodisch oxidiertes Aluminium ist in der Praxis anzutreffen. Insbesondere die nach der anodischen Oxidation noch zusätzlich bezüglich ihrer Haftung und Struktur beeinflußten Materialien sind auch auf dem Druckplattengebiet im Einsatz, dennoch sind gewisse Verbesserungen noch wünschenswert. Dazu gehören z. B. die Verhinderung von sporadisch auftretenden Fehlstellen in der Oxidschicht oder beim Aufbringen der lichtempfindlichen Schicht, das Ausschalten von gelegentlichem, unvorhersehbarem vorzeitigem Bildzusammenbruch auf der Druckmaschine oder ein rascheres und zuverlässigeres Einfärben auf der Druckmaschine. Eine noch längere Standzeit auf der Druckmaschine ist wünschenswert, sowie eine Verfahrensverbesserung, die wirtschaftlicher durchzuführen ist, als die herkömmliche anodische Oxidation, nach der sehr häufig in einem anschließenden zweiten und damit zusätzlich auszuführendem Arbeitsgang als Vorstufe für das spätere Beschichten des Trägermaterials mit einer lichtempfindlichen Schicht versiegelt oder in anderer Form nachbehandelt wird. Außerdem ist eine verbesserte Korrosionsbeständigkeit und wirtschaftlichere Herstellung wünschenswert.

Aufgabe der Erfindung ist es deshalb, ein besonders wirtschaftliches Verfahren zur Herstellung von Druckplatten aus anodisch oxidiertem Aluminium vorzuschlagen, bei dem sowohl eine für die Praxis ausreichende Aluminiumoxid-Schicht entsteht, als auch eine Modifizierung (Versiegelung) der Poren dieser Schicht stattfindet, so daß die Verfahrensprodukte eine verbesserte Korrosionsbeständigkeit und eine verbesserte Haftfähigkeit zeigen, höhere Druckauflagen ergeben, zu einem geringeren Verschleiß auf der Druckmaschine führen, eine gesteigerte Lagerfähigkeit aufweisen und nicht zuletzt in ihrer Hydrophilie verbessert sind.

Die Erfindung geht aus von einem Verfahren zur Herstellung von Druckplatten mit platten-, folien- oder bandförmigem Aluminium oder Aluminiumlegierungen als Trägermaterial, wobei das Trägermaterial einer anodischen Oxidation in einem wäßrigen, mindestens eine mehrbasische, organische Säure enthaltenden Elektrolyten, gegebenenfalls nach vorhergehender mechanischer, chemischer und/oder elektrochemischer Aufrauhung, unterworfen wird. Das erfindungsgemäße Verfahren ist dadurch gekennzeichnet, daß die mehrbasische organische Säure mindestens fünf Säurefunktionen aufweist und eine wasserlösliche polymere Phosphon- oder Carbonsäure oder Polyvinylphosphonsäure ist. Zusätzlich kann der wäßrige Elektrolyt anorganische Säure aus der Gruppe Phosphorsäure, Phosphorige Säure und einem Gemisch aus Phosphorsäure und Schwefelsäure oder Phosphoriger Säure entalten.

Das erfindungsgemäße Verfahren kann kontinuierlich oder diskontinuierlich durchgeführt werden.

Die nach dem erfindungsgemäßen Verfahren zu behandelnden Materialien aus Aluminium werden im allgemeinen zuerst gereinigt, wozu verschiedenste organische Lösemittel oder wäßrig-alkalische Lösungen eingesetzt werden. Zur alkalischen Entfettung verwendet man beispielsweise wäßrige Natriumhydroxid-, Kaliumhydroxid-, Trinatriumphosphat- und Natriumsilikat-Lösungen, die auch oberflächenaktive Mittel

0 048 909

enthalten können. Aus Umwelt- und Gesundheitsgründen ist das Entfetten mit organischen Lösemitteln. z. B. mit Trichlorethylen, 1,1,1-Trichlorethan und Perchlorethylen, weniger gebräuchlich. Für Offsetdruckzwecke verwendbar und bevorzugt sind die Aluminiumlegierungen "Reinaluminium", 1100, 3003 und A-19, typische Analysen dieser Legierungen für Offsetdruck in Gewichts-% sind wie folgt:

| Leigierung | Al | Mg | Mn | Fe | Si | Cu | Zn | Ti |
|---|---|---|---|---|---|---|---|---|
| "Rein-Al" | $\geq$99,5 | - | - | 0,4 | 0,3 | 0,02 | 0,07 | 0,03 |
| 1100 | 99,2 | - | - | 0,375 | 0,375 | 0,05 | - | - |
| 3003 | $\geq$98,5 | - | 0,7 | 0,15 | 0,2 | 0,05 | 0,2 | 0,2 |
| A-19 | 98,3 | 0,9 | - | 0,375 | 0,375 | 0,05 | - | - |

Die metallische Oberfläche kann glatt oder aufgerauht sein. Zum Aufrauhen der Oberfläche können die üblichen Techniken angewendet werden. Dazu gehören u. a. das chemische Ätzen in alkalischen oder sauren Lösungen, das Körnen durch trockenes Abschleifen mit Metallbürsten, nasses Abschleifen mit Bürsten und Aufschlämmungen von Schleifpartikeln, Aufrauhen mit Kugeln und/oder das elektrochemische Aufrauhen in Salzsäure oder Salpetersäure. Die Oberflächenrauhigkeit und -struktur sind bei jedem dieser Verfahren unterschiedlich. Die mittlere Rauhtiefe $R_z$, kann im Bereich von 1 bis 15 µm liegen.

Die Rauhtiefe wird dabei nach DIN 4768in der Fassung vom Oktober 1970 ermittelt, die Rauhtiefe $R_z$ ist dann das arithmetische Mittel aus den Einzelrauhtiefen fünf aneinandergrenzender Einzelmeßstrecken. Die Einzelrauhtiefe ist definiert als der Abstand zweier Parallelen zur mittleren Linie, die innerhalb der Einzelmeßstrecke das Rauhheitsprofil am höchsten bzw. am tiefsten Punkt berühren. Die Einzelmeßstrecke ist der fünfte Teil der senkrecht auf die mittlere Linie projizierten Länge des unmittelbar zur Auswertung benutzten Teils des Rauhheitsprofils. Die mittlere Linie ist die Linie parallel zur allgemeinen Richtung des Rauhheitsprofils von der Form des geometrisch-idealen Profils, die das Rauhheitsprofil so teilt, daß die Summen der werkstofferfüllten Flächen über ihr und der werkstofffreien Flächen unter ihr gleich sind.

Die praktische Durchführung dieser Erfindung hat gezeigt, daß für beste Ergebnisse die saubere Oberfläche sofort weiter elektrolytisch behandelt werden sollte, bevor sich Luftoxid bilden kann. Ehe eine zuvor gereinigte, entfettete und gegebenenfalls aufgerauhte Platte nach dem erfindungsgemäßen Verfahren behandelt wird, kann sie noch zusätzlich geätzt werden, um Luftoxid zu entfernen. Dieses Ätzen kann mit den bekannten Ätzmitteln erfolgen, z. B. mit sauren und alkalischen Lösungen und anschließendem Abspülen. Ein Verfahren zum Entfernen von Luftoxid ist z. B. das Entschichten der Platte mit einer Phosphorsäure-/-Chromsäure-Lösung. Die metallische Oberfläche sollte daher unmittelbar nach dem Reinigen, Aufrauhen (falls dieser Schritt erwünscht ist) und Ätzen vorzugsweise mit Wasser abgespült und in noch nassem Zustand elektrolytisch behandelt werden, obwohl man auch brauchbare Erzeugnisse erhalten kann, wenn diese Vorsichtsmaßnahme nicht streng eingehalten wird.

Mehrbasische polymere organische Säuren, die im erfindungsgemäßen Verfahren geeignet sind, sind beispielsweise das Kondensationsprodukt aus Benzolphosphonsäure und Formaldehyd (Polybenzolphosphonsäure), hydrolysierte Copolymere von Methylvinylether und Maleinsäureanhydrid, Copolymere von Methylvinylether und Maleinsäure, Polyvinylsulfonsäure, Polyvinylphosphosäure und Mischungen dieser Säuren. Alle obengenannten Säuren sind wasserlöslich. Bevorzugte Säuren im erfindungsgemäßen Verfahren sind Phosphonsäuren.

Zu den bevorzugten Elektrolyten bei der Herstellung von Druckplatten-Trägermaterialien gehören Polybenzolphosphonsäure, hydrolysierte Copolymere von Methylvinylether und Maleinsäureanhydrid, Copolymere von Methylvinylether und Maleinsäure, Polyvinylsulfonsäure, Polyvinylphosphonsäure, Poly-2-ethyl-hexanphosphonsäure und Mischungen dieser Säuren. Zu den am meisten bevorzugten Elektrolyten gehören Polybenzolphosphonsäure, das Kondensationsprodukt aus Benzolphosphonsäure und Formaldehyd, Polyvinylphosphonsäure, Poly-2-ethylhexanphosphonsäure und Mischungen dieser Säuren. Die mögliche Elektrolytkonzentration reicht von etwa 0,01 % bis zur Sättigung (Lösungen über etwa 30 % sind jedoch häufig wegen ihrer Viskosität unzweckmäßig), und sie ist nicht wesentlich von der chemischen Struktur abhängig. Am unteren Ende des Konzentrationsbereiches ist die Leitfähigkeit der Lösung sehr gering.

Trotzdem bildet sich selbst bei einer Konzentration von nur 0,05 % eine anodisch erzeugte Oxidschicht, die dem Aluminiumträger Korrosionsbeständigkeit, Alterungsbeständigkeit, Hydrophilie und drucktechnische Eigenschaften verleiht, die besser sind als bei typischen bekannten Produkten, z. B. bei einer Aluminiumplatte, die in herkömmlicher Weise anodisiert und dann in einem zweiten Schritt in einer warmen wäßrigen Lösung aus Polyvinylphosphonsäure nichtelektrolytisch versiegelt wurde. Die Stromzuführungskapazität erhöht sich rasch mit steigender Konzentration des Elektrolyten und führt zu kürzeren Verfahrenszeiten und geringerem Spannungsbedarf. Bei Elektrolytkonzentrationen zwischen 1 % und 5 % ergeben sich kaum Unterschiede in den Eigenschaften der Erzeugnisse, und die charakteristische Eigenschaften erhält man, trotz der oftmals hohen Viskosität des Elektrolyten, sogar noch bei 30 %. Weiterhin führt bei konstanter Spannung eine steigende Konzentration zu einem Abfall in der Wachstumsrate der Schichtdicke. Unter Berücksichtigung der erzielten Eigenschaften, der leichten Verarbeitung, der erreichten Schichtdicke und der Elektrolytkosten liegt der besonders bevorzugte Konzentrationsbereich zwischen 0,8 % und 5 %.

Das Verhältnis zwischen dem Gewicht der anodisch erzeugten Oxidschicht und der verwendeten Gleichstromspannung ist in etwa linear. In Versuchen mit 1 %-iger wäßriger Polyvinylphosphonsäure bei 10 V

4

(Gleichstrom) beträgt das Schichtgewicht 40 mg/m², bei 110 V (Gleichstrom) ist das Schichtgewicht 860 mg/m². Diese Zahlen werden bei einer Elektrolysedauer von 60 sec ermittelt. Bei allen Spannungsstärken über 5 V bewirkt die elektrolytisch aufgebrachte Schicht Korrosionsbeständigkeit und drucktechnische Eigenschaften, die dem Stand der Technik überlegen sind.

Wenn die Spannung auf 70 V (Gleichstrom) gebracht wird, erhöht sich vermutlich aufgrund des größeren Schichtgewichts und der größeren Schichtdicke auch die Beständigkeit der Oxidschicht; über 70 V verringert sich die Schichtbeständigkeit wieder, was man darauf zurückzuführen glaubt, daß die Schichtdichte verloren gegangen ist, weil die Durchschlagsfestigkeit der Schicht überschritten und die Schicht perforiert wurde. Diese Ansicht findet ihre Bestätigung bei Untersuchungen unter dem Durchstrahlungs-Elektronenmikroskop, bei denen man die Perforation erkennen kann. Die Korrosionsbeständigkeit wird also durch einen Betrieb unter 70 V begünstigt.

Mit Platten, bei denen die Elektrolyse mit geringeren Spannungen durchgeführt wurde, laufen die Druckpressenversuche länger. In einem Vergleichsversuch mit diazobeschichteten Aluminiumplatten, die bei 10, 20 bzw. 40 V elektrolytisch behandelt worden waren, war die Auflagenhöhe umgekehrt proportional zur Elektrolysespannung und zur Oxidschichtdicke. Die Ergebnisse der Druckversuche weisen nach, daß niedrigere Spannungen eine bessere Haftung an der lichtempfindlichen Schicht begünstigen, insbesondere bei Schichten auf Diazobasis, wobei der Bereich zwischen 1 V, insbesondere 10 V, und 30 V bevorzugt ist. Für das Verfahren wird Gleichstrom bevorzugt, obwohl auch Wechselstrom überlagert werden kann; besonders gut geeignet sind die Rechteckwellen von pulsierenden Stromquellen.

Die Stromstärke ist zu Beginn des erfindungsgemäßen Verfahrens am höchsten und fällt mit der Zeit ab, während sich die Oxidschicht auf der Metalloberfläche aufbaut und die Stromführungskapazität herabsetzt. Innerhalb von 30 s ist sie auf eine Stufe abgesunken, bei der der weitere Stromverbrauch minimal wird. Dies ist ein wichtiger Faktor für die Wirtschaftlichkeit des Verfahrens, da sich dann auch bereits eine brauchbare Schicht aufgebaut hat. Mit einer 1 %-igen wäßrigen Polyvinylphosphonsäure-Lösung als Elektrolyt stieg die Stromstärke, in Abhängigkeit von der beaufschlagten Spannung und der Probengeometrie, sprunghaft auf 10 A/dm² an und fiel dann auf 120 mA/dm² ab. Dieses Abfallen auf sehr geringe Stromstärken ist charakteristisch für das erfindungsgemäße Verfahren, im Gegensatz dazu fällt der Strom beim normalen Anodisieren mit den einleitend genannten Elektrolyten langsam ab und bleibt für die restliche Zeit des Verfahrens auf Stufen um 10 bis 15 A/dm². Stromdichten von 1 bis 5, insbesondere 1,3 A/dm² bis 4,3 A/dm² kennzeichnen günstige Verfahrensbedingungen und werden bevorzugt.

Die Temperatur bei der Verfahrensdurchführung kann von -2° C (nahe dem Gefrierpunkt des Elektrolyten) bis zu 60° C variieren. Aufgrund von Oberflächenhärteprüfungen, Beständigkeitsuntersuchungen der Oxidschicht, Bildhaftung, Hydrophilie und Alterungseigenschaften werden die besten Ergebnisse bei 10°C erzielt. Der Leistungsabfall von 10°C bis auf Raumtemperatur und sogar bis zu 40°C ist jedoch nicht sehr groß. Der Betrieb bei sehr niedrigen Temperaturen würde eine kostspielige Kühlkapazität erfordern, aus diesem Grund wird ein Temperaturbereich zwischen 10°C und 35°C vorgezogen, und ganz besonders bevorzugt wird mit einer Betriebstemperatur von 20°C bis 25°C gearbeitet, weil dabei die Verfahrenswirtschaftlichkeit am größten und der Leistungsverlust am geringsten ist.

Mehr als 60 % der Aluminiumoxid-Schicht entstehen während der ersten 5 s (ca. 0,08 min) der anodischen Oxidation. Für drucktechnische Anwendungen sind Zeitspannen von mehr als 5 min nicht angebracht, weil dann keine weitere Schicht erzeugt wird, sie sind jedoch nicht schädlich, solange die Spannung niedrig ist, wie oben erörtert. Eine Zeitspanne zwischen 0,16 min und 1 min wird bevorzugt.

Vom Verfahren her gesehen sind die kurze (Behandlungs-)Zeit, die niedrige Temperatur (Raumtemperatur, bei der kaum die Notwendigkeit einer zusätzlichen Heizung oder Kühlung besteht) und der geringe Stromverbrauch insgesamt günstige wirtschaftliche Faktoren, im Vergleich zum herkömmlichen zweistufigen Verfahren mit Anodisieren und anschließender charakteristischer Tauchbehandlung in der Wärme.

In der Ausführungsform des erfindungsgemäßen Verfahrens, bei der noch zusätzlich zu mindestens einer mehrbasischen, polymeren organischen Säure anorganische Säure zugegeben wird, werden bevorzugt folgende Verfahrensparameter beachtet:

Die Aufeinanderfolge der Vorgänge mit zunehmender Zeit in einem typischen elektrolytischen Abscheideversuch kann beispielhaft wie folgt beschrieben werden. Dabei wird ein wäßriger Elektrolyt aus 100 g/l Phosphorsäure mit Polyvinylphosphonsäure in einer Konzentration von 1 %, bei einer Temperatur von 20°C und Gleichstrom mit 10 V angewendet, wobei eine gereinigte und geätzte Aluminiumplatte als Anode und ein Kohlenstoffstab als Kathode dienen. Die die Oberflächenschicht bildende Aluminiumoxidschicht baut sich zunächst sehr rasch auf. Während dieses Zeitraums bleibt die Spannung im wesentlichen konstant. Die Stromstärke ist keine vorrangige Veränderliche, sie wird jedoch durch die anderen gewählten Bedingungen bestimmt, insbesondere durch die Spannung und die Elektrolytkonzentration; kurz nach Beginn der Elektrolyse, fängt die Stromstärke an abzunehmen.

Binäre Systeme aus Phosphorsäure mit mehrbasischen, polymeren organischen Säuren können Konzentrationen von 10 g/l $H_3PO_4$ bis 200 g/l $H_3PO_4$ haben. Vorzugsweise werden zwischen 20 g/l und 100 g/l $H_3PO_4$ eingesetzt und mindestens 0,25 %, vorzugsweise mindestens 0,5 % mehrbasischer, polymerer organischer Säure zugesetzt, um die oben beschriebenen Eigenschaften und Vorteile der anodisch oxidierten Aluminiumplatte zu gewährleisten. Bei ternären Systemen, in denen der Phosphorsäure Schwefelsäure oder Phosphorige Säure zugemischt wird, kann eine solche Mischung über den gesamten Bereich der Zusammensetzung variieren. Hohe Verhältnisse $H_2SO_4$ zu $H_2PO_4$ erfordern einen höheren Anteil an mehrwertiger, polymerer organischer Säure, d. h. mehr als 1 % wenn die Nichtporosität sichergestellt werden soll. Ein sehr hohes Verhältnis $H_2SO_4$ zu $H_3PO_4$ kann jedoch die Bildung einer nichtporösen Schicht verhindern, bei geringeren Verhältnissen $H_2SO_4$ zu $H_3PO_4$ wird die Nichtporosität schon bei einem Anteil an mehrbasischer, polymerer organischer Säure von 0,5 % erreicht. Auf jeden Fall ist ein höherer Gehalt an mehrbasischer, polymerer organischer Säure nicht schädlich. Wenn der Gehalt an anorganischer Säure gering genug ist, entsteht durch die elektrolytische Abscheidung in allen Fällen eine nichtporöse Beschichtung, die in erster Linie durch die Konzentration der mehrbasischen, polymeren organischen Säure bestimmt wird.

Die Stromzuführungskapazität erhöht sich rasch mit der Konzentration des Elektrolyten und führt zu kürzeren Verfahrenszeiten und geringem Spannungsbedarf. Das Verhältnis zwischen dem Gewicht der entstehenden Aluminiumoxidschicht und der verwendeten Gleichspannung ist in etwa linear. Bei allen Spannungen über 5 V bewirkt die elektrolytisch abgeschiedene Schicht eine Korrosionsbeständigkeit und drucktechnische Eigenschaften, die den Erzeugnissen aus dem Stand der Technik überlegen sind.

Die Elektrolysespannungen können in einem Bereich von 5 V bis 75 V (Gleichstrom) und darüber liegen. Hohe Gewichte der elektrolytisch abzuscheidenden Oxidschicht erreicht man leichter in Gegenwart einer starken anorganischen Säure, wobei weder hohe Spannungen noch lange Behandlungszeiten erforderlich sind. Die erwünschten erfindungsgemäßen Erzeugnisse erzielt man, sowohl bei binären als auch bei ternären Systemen, vorzugsweise mit Spannungen von 5 V bis 40 V. Die Stromstärke ist eine abhängige Veränderliche, wobei die gleichbleibende Zusammensetzung des Elektrolyten und die Spannung die unabhängigen Veränderlichen sind. Stromdichten von 0,2 $A/dm^2$ bis zu 6 $A/dm^2$ kennzeichnen günstige Verfahrensbedingungen und werden bevorzugt. Die Temperatur bei dieser Verfahrensdurchführung kann ebenfalls von -2° C (nahe dem Gefrierpunkt des Elektrolyten) bis zu 60° C variieren.

Es besteht auch die Möglichkeit, vor dem Aufbringen der Aluminiumoxidschicht nach dem erfindungsgemäßen Verfahren (d. h. unter Einsatz einer mehrbasischen, polymeren organischen Säure), bereits eine anodische Oxidation des Aluminiummaterials nach einem der klassischen Verfahren, insbesondere mit wäßriger Schwefelsäure durchzuführen. In diesem Falle werden die Poren durch das nachfolgende erfindungsgemäße Verfahren versiegelt, so daß ebenfalls eine für die Praxis verbesserte Oberfläche entsteht.

Als Anwendungsgebiet für ein nach dem erfindungsgemäßen Verfahren anodisch oxidiertes Material kommt insbesondere seine Verwendung als Trägermaterial bei der Herstellung von eine lichtempfindliche Schicht tragenden Druckplatten in Frage. Dabei wird entweder beim Hersteller von vorsensibilisierten Druckplatten oder beim Beschichten eines Trägermaterials beim Verbraucher das Trägermaterial mit einer der folgenden lichtempfindlichen Massen beschichtet:

Als lichtempfindliche Schicht sind grundsätzlich alle Schichten geeignet, die nach dem Belichten, gegebenenfalls mit einer nachfolgenden Entwicklung und/oder Fixierung eine bildmäßige Fläche liefern, von der gedruckt werden kann.

Neben den auf vielen Gebieten verwendeten Silberhalogenide enthaltenden Schichten sind auch verschiedene andere bekannt, wie sie z. B. in "Light-Sensitive Systems" von Jaromir Kosar, John Wiley & Sons Verlag - New York, 1965 beschrieben werden: die Chromate und Dichromate enthaltenden Kolloidschichten (Kosar, Kapitel 2): die ungesättigte Verbindungen enthaltenden Schichten, in denen diese Verbindungen beim Belichten isomerisiert, umgelagert, cyclisiert oder vernetzt werden (Kosar, Kapitel 4); die photopolymerisierbare Verbindungen enthaltenden Schichten, in denen Monomere oder Präpolymere gegebenenfalls mittels eines Initiators beim Belichten polymerisieren (Kosar, Kapitel 5); und die o-Diazo-chinone wie Naphthochinondiazide, p-Diazo-chinone oder Diazoniumsalz-Kondensate enthaltenden Schichten (Kosar, Kapitel 7). Zu den geeigneten Schichten zählen auch die elektrophotographischen Schichten, d.h. solche die einen anorganischen oder organischen Photoleiter enthalten. Außer den lichtempfindlichen Substanzen können diese Schichten selbstverständlich noch andere Bestandteile wie z. B. Harze, Farbstoffe oder Weichmacher enthalten.

Insbesondere können die folgenden lichtempfindlichen Massen oder Verbindungen bei der Beschichtung der nach dem erfindungsgemäßen Verfahren hergestellten Trägermaterialien eingesetzt werden: Iminochinondiazide, o-Chinondiazide und Kondensationsprodukte aromatischer Diazoniumverbindungen zusammen mit geeigneten Bindemitteln, wie sie z. B. in den US-A 3 175 906, 3 046 118, 2 063 631, 2 667 415 und 3 867 147 beschrieben sind, wobei die in dem zuletzt genannten Patent erwähnten Massen generell bevorzugt werden. Weiterhin geeignet sind Photopolymersysteme auf der Basis von ethylenisch ungesättigten Monomeren mit Photoinitiatoren, die auch noch polymere Bindemittel enthalten können. Außerdem sind Photodimerisationssysteme, wie z. B. Polyvinylcinnamate, und Systeme auf der Basis von Diallylphthalat-Präpolymeren geeignet. Derartige Systeme sind z. B. in den US-A 3 497 356, 3 615 435, 3 926 643, 2 670 286, 3 376 138 und 3 376 139 beschrieben.

Die Dichte der Aluminiumoxidschicht und seine Alkaliresistenz können durch den Kaliumzinkat-Versuch für anodisierte Träger gemessen werden. Dieser Versuch ist in der US-A 3 940 321 beschrieben. Als Bewertungskriterium gilt die Auflösegeschwindigkeit der Schicht in sec oder min in einer alkalischen Zinkatlösung. Dabei wird auf die Oberfläche der Beschichtung eine Lösung von Kaliumzinkat (enthaltend ZnO: 6,9 %, KOH: 50,0 %, $H_2O$: 43,1 %) aufgetragen. Eine unbehandelte Platte bildet in einer raschen Reaktion einen schwarzen Film (Zinkbildung). Da bei einer anodisierten Platte eine Sperrschicht erzeugt wird, braucht die Zinkatlösung hier längere Zeit für die Reaktion. Zum Vergleich: Eine Aluminiumplatte, die in Schwefelsäure auf ein Oxidgewicht von 3,0 $g/m^2$ anodisiert wird, zeigt nach 30 sec eine Schwärzung; eine in Phosphorsäure anodisierte Platte mit einem Oxidgewicht von 1,0 $g/m^2$ braucht 2 min für die Reaktion. Bei Versuchen mit elektrolytisch behandelten Platten, bei denen der Elektrolyt Polyvinylphosphonsäure ist, werden durchweg wesentlich längere Reaktionszeiten erreicht, sofern nicht mit extrem geringen Konzentrationen oder Betriebsbedingungen gearbeitet wurde. Es hat sich zwar gezeigt, daß der Zinkatversuch klar erkennbare Umschlagpunkte für anodische Beschichtungen nach dem Stand der Technik ergibt, z. B. bis zu etwa einer min, doch bei den Erzeugnissen nach dieser Erfindung ist es, insbesondere mit zunehmender Reaktionszeit, schwieriger, Umschlagpunkte zu erkennen. Der nachfolgend beschriebene Zinn-II-chlorid-Versuch ist nicht nur schneller, sondern ergibt auch einen leichter erkennbaren Umschlagpunkt, insbesondere wenn die Beobachtungen unter einem Vergrößerungsglas vorgenommen werden. Bei beiden Reagenzien erfordern die längeren Reaktionszeiten jedoch eine gewisse Erfahrung, wenn die Auslegung der Ergebnisse korrekt sein soll.

In der US-A 3 902 976 wird der Einsatz einer Zinn-II-chlorid-Lösung für diesen Zweck beschrieben. Am Umschlagpunkt zeigt sich eine sichtbare Wasserstoffentwicklung mit anschließender Bildung von schwarzen Flecken. Mit Zinkat und Zinn-II-chlorid untersuchte repräsentative Proben ergeben, daß der Zinn-II-chlorid-Versuch etwa viermal schneller ist. In herkömmlicher Weise mit Schwefelsäure und/ oder Phosphorsäure als Elektrolyten anodisiertes Aluminium wird wegen seiner hervorragenden Witterungsbeständigkeit für architektonische Zwecke verwendet. Zinn-II-chlorid-Versuche an solchen Materialien dauern in der Regel 4 bis 10 sec, wogegen die Versuchszeiten bei den Aluminiumplatten nach dieser Erfindung 15 sec bei angewendeter 0,1 %-iger Elektrolytlösung, bis zu mehr als 200 sec bei einer 5 %-igen Elektrolytlösung, betragen. Man nimmt an, daß die Schichtdicke in einer Wechselbeziehung zur Korrosionsbeständigkeit steht, die die maßgebende Eigenschaft der zum Schutz und zur Verschönerung von Metallen aufgebrachten anodischen Schichten ist.

Das Schichtgewicht der wegen ihrer Entstehung auch "Organo-Metalloxid-Komplex" genannten Oxidschicht kann quantitativ durch Entschichten in einer wäßrigen Chromsäure/Phosphorsäure-Standardlösung (1,95 % $CrO_3$, 3,41 % $H_3PO_4$ - 85 %-ig) bei 82°C in 15 min ermittelt werden.

Die Haftung der nach dem erfindungsgemäßen Verfahren erzeugten Schichten ist viel besser als von solchen, die nach der Tauchbehandlung in einer warmen Lösung, wie sie nach dem Stand der Technik im Anschluß an das Anodisieren durchgeführt wird, hergestellt werden. Durch eine wäßrige 1,0 n NaOH-Lösung wird eine thermisch durch Tauchen aufgebrachte Beschichtung zum größten Teil entfernt. Von einer elektrolytisch aufgetragenen Schicht wird dagegen praktisch nichts weggenommen. Das heißt diese Schicht ist in Reagenzien von gleicher oder geringerer Aggressivität unlöslich.

Platten für den Offsetdruck werden nach dem elektrolytischen Aufbringen der Aluminiumoxidschicht und vor dem Beschichten mit einer lichtempfindlichen Schicht geprüft. Die Platte wird naß oder trocken eingefärbt, wobei der zuletzt genannte Versuch der strengere (problematischere) ist. Nach dem Einfärben wird die Platte unter fließendem Wasser abgespült oder mit Wasser besprüht und leicht überwischt. Die Leichtigkeit und Vollständigkeit, mit der sich die Druckfarbe entfernen läßt, ist ein Hinweis auf die Hydrophilie der Oberfläche.

Bei erfindungsgemäß hergestellten Platten, die trocken eingefärbt und in einem Ofen bei 100°C nachgetrocknet worden waren, ließ sich die Druckfarbe vollständig abspülen. Platten, die entweder nicht anodisiert oder in herkömmlicher Weise anodisiert und dann in eine warme wäßrige Lösung von Polyvinylphosphonsäure getaucht worden waren, zeigten dagegen, selbst nach der Alterung unter weniger strengen Bedingungen, ein "Tonen", das nicht rückgängig zu machen war.

Bei Einfärbeversuchen wurden Platten mit und ohne lichtempfindliche Beschichtungen in unterschiedlichen Zeiten und bei unterschiedlichen Temperaturen gealtert und dann auf die Beibehaltung ihrer hydrophilen Eigenschaften geprüft. An Platten mit verschiedenen lichtempfindlichen Diazobeschichtungen wurden durch Alterung die praktische Lichtempfindlichkeit, die Auflösung, die unveränderte Hydrophilie des Hintergrunds und das leichte Entwickeln überprüft.

Schließlich ließ man Platten für Offsetzwecke, einschließlich Vergleichsplatten, auf einer Druckpresse laufen. Es wurden Unterschiede beim Oberflächenverschleiß, der Punktverkleinerung, der Verschiebung der Farbannahme auf dem Stufenkeil, der Geschwindigkeit und Sauberkeit des Einfärbens und der Auflagenhöhe beobachtet. Im allgemeinen waren in allen Fällen Platten, die innerhalb eines großen Bereichs von Konzentrationen, Zeiten, Temperaturen, Spannungen und Stromdichten erfindungsgemäß elektrolytisch beschichtet worden waren, den Platten nach dem Stand der Technik überlegen, wobei sich zeigte, daß die Verfahrensparameter von relativ geringer Relevanz waren. Im Rahmen der Erfindung erwiesen sich jedoch bestimmte Veränderliche als bedeutender gegenüber anderen, und bestimmte Parameter dieser Veränderlichen waren entscheidender für das Erzielelen der besten Ergebnisse.

Die Aufeinanderfolge der Vorgänge mit zunehmender Zeit in einem typischen elektrolytischen Auftragsversuch sollen hier beschrieben werden. Dabei wird z. B. eine 1 %-ige wäßrige Polyvinylphosphonsäure-Lösung als Elektrolyt verwendet, bei einer Temperatur von 20°C und Gleichstrom mit 10 V. Eine gereinigte und geätzte Aluminiumplatte dient als Anode und ein Kohlenstoffstab als Kathode.

Das Aluminiumoxid baut sich zunächst sehr rasch auf, nach der ersten sec beträgt das Schichtgewicht über 140 mg/m2; bis zur dritten sec hat es 250 mg/m2 erreicht, und nach 5 sec beginnt es, sich bei 275 mg/m2 abzuflachen. Bis zu einer Zeit von 300 sec nimmt das Schichtgewicht nicht mehr wesentlich zu. Während dieses Zeitraums bleibt die Spannung im wesentlichen konstant. Die Stromstärke ist keine vorrangige Veränderliche, sie wird jedoch durch die anderen gewählten Bedingungen bestimmt, insbesondere durch die Spannung und die Elektrolytkonzentration. Ganz kurz nach Beginn der Elektrolyse, fängt die Stromstärke an abzunehmen.

Es entsteht ein Bild eines sich selbst beschränkenden Prozesses, bei dem sich eine elektrolytisch aufgebrachte Sperrschicht aufbaut, die vermutlich aus einem Organo-Metalloxid-Komplex besteht und die den weiteren Stromfluß einschränkt. Diese Einschränkung ist nicht so stark wie bei der Anodisierung mit Borsäure, wo die maximale Schichtdicke beispielsweise 13 bis 16 · 10⁻¹⁰ m/V ausmacht.

Der Zinn-II-chlorid(SnCl₂)-Versuch verläuft bis zu 250 sec parallel zum Anstieg des Schichtgewichts Die Reaktionszeit erhöht sich rasch bis auf 150 sec (entsprechend 630 sec beim Kaliumzinkat-Versuch) und bleibt dann bis zu einer Elektrolysezeit von 250 sec konstant, wonach es zu einem geringen Rückgang der Zinn-II-chlorid-Reaktionszeit kommt. Bei höheren Spannungen ist die Gewichtszunahme größer. Die Zinn-II-chlorid-Versuchszeit, die anfänglich parallel zur Gewichtszunahme verläuft, fällt hier jedoch viel früher ab. Die Erklärung hierfür ergibt sich aus einer Untersuchung mit dem Durchstrahlungs-Elektronenmikroskop, während die Oberfläche bis zu etwa 55.000-facher Vergrößerung für Behandlungszeiten bis zum Abfall der Reaktionszeit im Zinn-II-chlorid-Versuch nichtporös und ohne Struktur erscheint, zeigt sie danach Narben, die durch Lichtbogenbildung verursacht sein könnten. Einfärbeproben bestätigen diese Erscheinung.

Aufgrund von Versuchen, die mit unterschiedlichen Spannungen und Zeiten durchgeführt wurden, nimmt man an, daß die Schicht aus dem vermuteten Organo-Metalloxid-Komplex auf der metallischen Oberfläche als Kondensator wirkt. Solange die Durchschlagsfestigkeit während der Elektrolyse nicht überschritten wird, ergibt sich mit der Dauer der Zeit keine weitere Gewichtszunahme, die Schicht ist nicht unterbrochen, und die Zinn-II-chlorid-Versuchszeit bleibt konstant. Wird die Durchschlagsfestigkeit dagegen überschritten, tritt eine Perforation der Schicht ein, und die Schichtdichte geht verloren; die Zinn-II-chlorid-Versuchszeit entspricht dieser Perforation. Das vorerwähnte Durchschlagen ist in erster Linie eine Funktion der Spannung; 70 V sind dabei das geringste Potential, bei dem es rasch zum Durchschlagen kommt. Unter der Voraussetzung, daß die Zeit über 250 sec hinaus verlängert wird, wird jedoch in dem genannten Beispiel bereits bei 30 V ein gewisses Durchschlagen beobachtet.

Die Schwelle für das Eintreten von Durchschlagsbedingungen ist also von den gewählten Verfahrensvariablen abhängig. Unterhalb dieser Schwelle, die leicht durch bekannte Verfahren ermittelt werden kann, liegen die am meisten bevorzugten Bedingungen für die Durchführung des erfindungsgemäßen Verfahrens und für das Erzielen von entsprechenden Erzeugnissen.

Untersuchungen mit dem Durchstrahlungs-Elektronenmikroskop bei mindestens 55.000-facher Vergrößerung an erfindungsgemäß hergestellten Aluminiumoxidschichten zeigen keine Porosität der Oberfläche des Erzeugnisses auf, wogegen herkömlich anodisiertes Aluminium bereits bei 5.000-facher Vergrößerung die typische Porosität aufweist. Weiterhin zeigt die ESCA-Untersuchung (Elektronen-Spektroskopie für die Chemische Analyse) an mit Polyvinylphosphonsäure behandeltem Aluminium ein hohes Verhältnis Phosphor : Aluminium (P/Al) in der Oberflächenschicht aus dem vermuteten Organo-Metalloxid-Komplex. Im Gegensatz dazu ist das Verhältnis P/Al bei herkömlich anodisiertertem Aluminium, selbst bei Verwendung von Phosphorsäure, sehr gering. In üblicher Weise anodisiertes Aluminium, das durch einfaches Eintauchen in heiße wäßrige Polyvinylphosphonsäure nicht-elektrochemisch nachbehandelt wurde, hat ein dazwischen liegendes, bedeutend geringeres Verhältnis P/Al. Die ESCA-Ergebnisse an Aluminium, das mit Polyvinylphosphonsäurebehandelt wurde, zeigen Verhältnisse Phosphor : Aluminium von 0,6 bis 0,9 : 1 für die Tauchbehandlung in heißer Polyvinylphosphonsäure, gegenüber 1,10 bis 2,54 : 1 (Durchschnitt 1,54) für die elektrolytische Behandlung in dieser Phosphonsäure.

Beim erfindungsgemäßen Einsatz von binären oder ternären Säuremischungen aus mehrwertiger, polymerer organischer Säure und anorganischer Säure werden im allgemeinen mindestens Werte erreicht, die denen einer nichtelektrolytischen Tauchbehandlung mit Polyvinylphosphonsäure mindestens entsprechen, aber auch bis zu 2 : 1 gehen können.

Bei einer dritten Analysemethode wird die Auger-Technik zur Dickenbestimmung der Schicht angewendet, die sich durch die elektrochemische Wirkung auf der Metalloberfläche aufgebaut hat. Die Dicke von Schichten mit gleichbleibender Zusammensetzung kann gemessen und für die verschiedenen elektrochemischen Verfahren verglichen werden. Da die bei jedem Verfahren benutzte Spannung bekannt ist, können die Ergebnisse in 10⁻¹⁰ m/V angegeben werden. Typische Sperrschichten, die unter Verwendung von Borsäure und Weinsäure hergestellt wurden, haben Dicken von 13 · 10⁻¹⁰ m/V bis 16 · 10⁻¹⁰ m/V und sind nichtporös. In üblicher Weise in Schwefelsäure oder Phosphorsäure anodisiertes Aluminium weist Schichten von 100 bis 150 · 10⁻¹⁰ m/V auf, die porös sind, wie durch eine Untersuchung mit dem Durchstrahlungs-Elektronenmikroskop ermittelt wird. Aluminium, das in einer 1 %-igen wäßrigen Polyvinylphosphonsäure-Lösung elektrolytisch behandelt wurde, entwickelt eine nichtporöse Schicht von 50 bis 30 · 10⁻¹⁰ m/V bei einer Spannung von 10 bzw. 30 V. Bei Einsatz eines wäßrigen Elektrolyten, der 100 g/l an Phosphorsäure und 1 % an Polyvinylphosphonsäure enthält, werden Werte von 100 · 10⁻¹⁰ m/V bei einer Spannung von 25 V erhalten. Zu beachten ist, daß die Schicht sich sehr rasch bildet und bei einer weiteren Verlängerung der Elektrolysezeit nicht dicker wird. Die Verfahrensprodukte nach dieser Erfindung sind also nicht-poröse Schichten und haben zusätzlich, zumindest wenn Phosphonsäuren als Elektrolyten verwendet werden, hohe Verhältnisse Phosphor : Aluminium, woraus ersichtlich ist, daß in dem unlöslichen Organo-Metalloxid-Komplex, aus dem die elektrolytisch aufgetragene Schicht vermutlich besteht, Moleküle des Elektrolyten zusammen mit Metalloxid enthalten sind.

In den folgenden Beispielen und der vorstehenden Beschreibung beziehen sich %-Angaben - sofern nichts anderes angegeben ist - auf das Gewicht.

**Beispiel 1**

Mehrere flächenförmige Abschnitte der Aluminiumlegierung 3003 mit den Maßen 17,75 cm · 19,0 cm · 0,05 cm wurden für die elektrolytische Behandlung vorbereitet. Dazu wurden sie zunächst auf beiden Seiten mit einem handelsüblichen, ein Tensid enthaltenen wäßrig-alkalischen Entfettungsmittel behandelt.

Der entfettete Aluminiumabschnitt wurde dann bei Raumtemperatur während 20 sec mit einer 1,0 N wäßrigen NaOH-Lösung geätzt. Nach dem Ätzen wurde der Aluminiumabschnitt gründlich mit Wasser abgespült und sofort in einen elektrisch isolierten Behälter, der mit einer 1,0 %-igen wäßrigen Polyvinylphosphonsäure-Lösung (PVPS) gefüllt war, eingesetzt. Zu beiden Seiten des Aluminiums wurden Bleielektroden angeordnet, deren Abmessungen den Abmessungen der Aluminiumplatte entsprachen. Die beiden Elektroden hatten jeweils einen Abstand von 10 cm von dem Aluminium. Es wurde eine Gleichstromquelle verwendet, wobei das Aluminium als Anode und die Bleielektroden als Kathoden geschaltet waren. Die Badtemperatur wurde auf 25°C gehalten, die Gleichspannung betrug 60 V. Der Prozeß dauerte 30 sec, die Platte wurde aus dem Bad genommen und gut abgespült, anschließend wurde sie trockengetupft.

Mehrere Tropfen einer gesättigten $SnCl_2$-Lösung wurden auf die Oberfläche aufgebracht, das $SnCl_2$ reagiert mit dem Aluminium, sobald es die durch den elektrochemischen Prozeß erzeugte Schicht durchdrungen hat. Vereinzelte schwarze Flecken von metallischem Zinn zeigen das Versuchsende an.

Bei der wie oben beschrieben hergestellten Oberfläche dauerte der $SnCl_2$-Versuch 182 sec. Durch Entschichten mit einer Chromsäure/Phosphorsäurelösung wurde das Schichtgewicht des Aluminiumoxids mit 648 mg/m² ermittelt. Die Hydrophilie der Oberfläche wurde durch Auftragen einer Farbe mit starken Abriebeigenschaften ohne Zuhilfenahme von Wasser geprüft. Dazu wurde ein trockener Applikator verwendet.

Die Platte wurde einwandfrei sauber, wenn sie sofort trocken eingefärbt und mit Wasser abgewaschen wurde. Weitere Plattenstücke wurden sieben Tage bei Raumtemperatur, sieben Tage bei 50°C sowie eine Stunde bei 100°C gealtert. Nach der Alterung wurden die Platten trocken eingefärbt und abgespült, in allen Fällen ließ sich die Farbe vollständig von den Platten abspülen.

Abschließend wurde die Platte mit einer lichtempfindlichen Beschichtung versehen, die ein Pigment, ein Polyvinylformal-Bindemittel und ein Diazonium-Kondensationsprodukt gemäß US-PS 3 867 147 enthielt. Beim Belichten durch ein Negativ und nach Entwickeln mit einem wäßrig-alkoholischen Entwickler ließ sich der Hintergrund leicht freilegen, und es blieb ein intensives Bild zurück, das sich beim Betrachten durch ein Vergrößerungsglas als von sehr guter Qualität erwies. Es war nicht erforderlich, die Platte vor dem Einfärben anzufeuchten, um ein "Tonen" zu verhindern.

Mit einem 21-stufigen Stauffer-Stufenkeil wurde so belichtet, daß man nach dem Entwickeln mit einem wäßrig-alkoholischen Entwickler 6 voll-gedeckte Stufen erhielt.

**Beispiele 2 bis 11**

In Versuchen wie in Beispiel 1 beschrieben, wurden anstelle von Polyvinylphosphonsäure die in der Tabelle aufgeführten Elektrolyten verwendet und die Platten anschließend weiterarbeitet. Nach der Herstellung gemäß Beispiel 1 wurden das Schichtgewicht der Oxidschicht, die Zeit beim $SnCl_2$-Versuch und das Ansprechen beim Einfärbeversuch für jede hergestellte Platte untersucht. Die Ergebnisse sind der Tabelle zu entnehmen, wobei die Bewertungen beim Einfärbeversuch folgende Bedeutung haben:

C  = ließ sich vollkommen sauber abspülen, für schwierige Anwendungen beim Offsetdruck geeignet
T  = leicht getont bzw. gesprenkelt
CT = Ergebnis zwischen C und T

**Tabelle 1**

| Beispiel | Säure | Zeit (sec) beim SnCl$_2$-Test | Schicht-gewicht (mg/m$^2$) | Einfärbe-versuch |
|----------|-------|-------------------------------|----------------------------|------------------|
| 2 | Polybenzolphosphonsäure | 87 | 138 | C |
| 3 | Polyvinyl-methylether-maleinsäureanhydrid (niedriger Viskosität), hydrolysiert | 91 | 142 | C |
| 4 | Polyvinyl-methylether-maleinsäureanhydrid (mittlerer Viskosität), hydrolysiert | 73 | 127 | C |
| 5 | Polyvinyl-methylether-maleinsäureanhydrid (hoher Viskosität), hydrolysiert | 57 | 118 | T |
| 6 | Polyvinyl-methylether-maleinsäureanhydrid (sehr hoher Viskosität), hydrolysiert | 53 | 107 | T |
| 7 | Polyvinyl-methylether-maleinsäure | 102 | 149 | C |
| 8 | Polyvinylsulfonsäure | 90 | 191 | CT |
| 9 | Poly-2-ethyl-hexanphosphonsäure | 118 | 192 | C |
| 10 | Polyacrylsäure | 43 | 102 | CT |
| 11 | Polymethacrylsäure | 37 | 93 | T |

**Vergleichsbeispiel V 1**

Es wurde eine Platte wie in Beispiel 1 beschrieben hergestellt. In diesem Fall war der Elektrolyt Phosphorsäure, die in einer Menge von 75g/1 zugesetzt wurde. Die Gleichspannung wurde auf 30 V herabgesetzt, da der Stromfluß bei 60 V Gleichspannung zu hoch gewesen wäre. Die Behandlungsdauer wurde von 30 auf 60 sec verlängert. Nach der Behandlung wurde die Platte abgespült und trockengetupft.

Das Oxidgewicht auf der Platte wurde mit 871 mg/m$^2$ ermittelt. Die Reaktionszeit beim SnCl$_2$-Versuch betrug 8 sec. Beim trockenen Einfärben der Oberfläche kam es zum "Tonen" der Platte. Ebenso trat nach dem Auftragen der lichtempfindlichen Schicht des Beispiels 1, Belichten, Entwickeln und Einfärben der Platte ein "Tonen" auf.

**Vergleichsbeispiel V 2**

Es wurde eine Platte wie im Vergleichsbeispiel V 1 hergestellt, mit dem Unterschied, daß die Platte nach der Entnahme aus dem Elektrolysebad abgespült und 30 sec lang in ein 66°C warmes Bad aus Leitungswasser mit einem Gehalt an 0,2 % Polyvinylphosphonsäure getaucht wurde. Nach der Behandlung wurde die Platte erneut abgespült und trockengetupft.

Das Gewicht des Oxidkomplexes auf der Platte betrug 909 mg/m$^2$, die Reaktionszeit beim SnCl$_2$-Versuch war 10 sec. Nach dem trockenen Einfärben der Platte konnte die Farbe nicht vollständig wieder abgenommen werden, d. h. nur ein Teil der Farbe ließ sich mit großer Mühe wieder entfernen.

Nach dem Beschichten des Trägers mit der lichtempfindlichen Lösung des Beispiels 1, Belichten, Entwickeln und Einfärben wurde festgestellt, daß die Platte nur dann praxisgerecht war, wenn der Hintergrund vor dem Einfärben angefeuchtet wurde.

**Vergleichsbeispiel V 3**

Eine Platte wurde wie in Beispiel 1 beschrieben entfettet und geätzt. Anstelle der Elektrolysebehandlung mit wäßriger Polyvinylphosphonsäure-Lösung wurde die geätzte Platte in ein 0,2 %-iges wäßriges Polyvinylphosphonsäurebad eingetaucht, das auf einer Temperatur von 66°C gehalten wurde (nichtelektrolytische Wärmebehandlung). Die Platte blieb 60 sec in dem Bad, wonach sie herausgenommen, abgespült und trockengetupft wurde. Beim $SnCl_2$-Versuch kam es zu einer unmittelbaren Reaktion (d.h. weniger als 1 sec). Das Entschichten der Platte erbrachte ein Schichtgewicht von 37 mg/m². Von einer frisch hergestellten Platte ließ sich trockene Farbe verhältnismäßig leicht abwischen, nach dem Altern (wie in Beispiel 1 beschrieben) stellte man fest, daß es zunehmend schwieriger wurde, die eingefärbte Oberfläche sauberzuwischen. Nach Lagerung von einer Woche zeigte die Oberfläche beim Einfärbeversuch ein nicht wieder zu beseitigendes "Tonen".

Auf die Platte wurde die lichtempfindliche Schicht des Beispiels 1 aufgetragen, sie wurde belichtet, entwickelt und eingefärbt. Beim nassen Einfärben war der Hintergrund zufriedenstellend, trockenes Einfärben führte zu einem Hintergrund, an dem nach dem Anspülen etwas von der Druckfarbe haften blieb.

### Vergleichsbeispiel V 4

Eine Platte wurde wie in Beispiel 1 beschrieben gereinigt und geätzt. Anschließend wurde sie sofort in ein elektrisch isoliertes wäßriges Bad eingesetzt, in dem sich 150 g/l einer 96 %-igen $H_2SO_4$ befanden. Die Platte wurde als Anode geschaltet und 30 sec lang bei konstanter Spannung mit 18 V Gleichstrom behandelt, die Badtemperatur wurde auf 40°C gehalten; die so behandelte Platte wurde aus dem Bad genommen, gut abgespült und trockengetupft. Die Oxidschicht hatte ein Gewicht von 3213 mg/m².

Die Zeit bis zur Reaktion in $SnCl_2$-Versuch betrug nur 4 sec. Trockenes Einfärben einer frisch hergestellten Oberfläche führte zu einem nicht rückgängig zu machenden "Tonen" der Platte.

Es wurde auch eine negativ-arbeitende lichtempfindliche Schicht gemäß Beispiel 1 aufgetragen und die Platte dann belichtet, entwickelt und eingefärbt. Sowohl bei den naß- als auch bei den trocken-eingefärbten Proben war der Hintergrund getont.

### Vergleichsbeispiel V 5

Eine Platte wurde genau wie im Vergleichsbeispiel V 4 hergestellt, mit der Ausnahme, daß die Platte in einem zusätzlichen Schritt 60 sec mit einer 66°C warmen, 0,2 %-igen wäßrigen Polyvinylphosphonsäure-Lösung behandelt wurde. Dieser Schritt wurde sofort nach dem Anodisieren und Abspülen der Platte durchgeführt. Nach der Wärmebehandlung mit Polyvinylphosphonsäure wurde die Platte gründlich abgespült und trockengetupft.

Bei der Untersuchung nach dem in Beispiel 1 beschriebenen Entschichtungsverfahren stellte man an der Platte ein Schichtgewicht von 3267 mg/m² fest. Die Zeit beim $SnCl_2$-Versuch lag bei 6 sec und war damit gering. Von einer trocken eingefärbten frisch hergestellten Platte ließ sich die Druckfarbe verhältnismäßig leicht entfernen. Unter den in Beispiel 1 angegebenen Alterungsbedingungen blieb nach 24 h an einzelnen Stellen Farbe zurück. Nach 48 h war die Oberfläche nicht mehr praxisgerecht, d. h. die Farbe ließ sich nicht entfernen.

Wenn eine negativ-arbeitende lichtempfindliche Schicht gemäß Beispiel 1 auf eine frisch hergestellte Oberfläche aufgetragen wurde, konnte man zufriedenstellend bebildern und entwickeln. Nach der Alterung wie in Beispiel 1 war der Hintergrund stets getont.

### Vergleichsbeispiel V 6

Eine Platte wurde wie in Beispiel 1 gereinigt und geätzt. In ein mit Wasser gefülltes Gefäß wurde Natriumsilikat mit einem Verhältnis $Na_2O$ zu $SiO_2$ von 2,5 zu 1 gegeben, bis die Konzentration der wäßrigen Lösung 7,0 betrug. Die Lösung wurde auf etwa 82°C erwärmt und auf dieser Temperatur gehalten. Dann wurde die Platte 60 sec in diese Lösung eingetaucht, nach Ablauf dieser 60 sec wurde sie herausgenommen und sofort gründlich abgespült. Im Anschluß an das Abspülen mit Wasser wurde die Platte 30 sec in eine 1 %-ige wäßrige $H_3PO_4$-Lösung eingetaucht, sie wurde dann herausgenommen, mit Wasser abgespült und trockengetupft.

Die Zeit beim $SnCl_2$-Versuch war 10 sec, nasses und trockenes Einfärben der frisch hergestellten Platten brachten befriedigende Ergebnisse, d.h. die gesamte Farbe war leicht zu entfernen. Platten, die eine Woche bei 50°C und eine Stunde bei 100°C gealtert worden waren, versagten beim trockenen Einfärbeversuch. Frisch hergestellte und mit einer negativ-arbeitenden Beschichtungslösung wie in Beispiel 1 versehene Platten waren nach dem Belichten, Entwickeln und Einfärben der Platte annehmbar. Wurde die Platte dagegen zuerst gealtert und dann beschichtet oder beschichtet und dann gealtert, war der Hintergrund nach einem trockenen Einfärben nach 7 Tagen bei 50°C und nach 4 Wochen bei Raumtemperatur nicht mehr praxisgerecht.

### Vergleichsbeispiel V 7

Es wurde eine Platte wie im Vergleichsbeispiel V 6 hergestellt, allerdings wurde in diesem Fall die Silikatisierung auf elektrochemischem und nicht auf thermischem Wege durchgeführt. Die in die heiße Natriumsilikatlösung getauchte Platte wurde als Anode geschaltet, 30 sec lang ein Potential von 30 V Gleichstrom angelegt und dann mit Wasser abgespült. Unmittelbar danach folgte eine Tauchbehandlung in einer 3,0 %-igen wäßrigen $H_3PO_4$-Lösung. Die Platte wurde erneut mit Wasser abgespült und trockengetupft.

Die Reaktionszeit beim $SnCl_2$-Versuch erhöhte sich auf 46 sec. Nach dem trockenen Einfärben einer frisch hergestellten Platte ließ sich die Farbe leicht entfernen. Bei Raumtemperatur gealterte Platten verloren ihre Hydrophilie, was sich als "Tonen" zeigte, wenn man die Platten nach 8 Wochen einem trockenen Einfärbeversuch unterzog. Die Alterung bei 50°C führte bereits nach 15 Tagen zum "Tonen" der trocken eingefärbten Platten. Gemäß Beispiel 1 lichtempfindlich beschichtete, entwickelte und eingefärbte frische Platten waren, nach ihrem Hintergrund beurteilt, zufriedenstellend, beschichtete Platten wurden nach 18 Wochen Lagerung bei Raumtemperatur und nach 22 Tagen Lagerung bei 50°C als für Offsetdruckzwecke unbrauchbar erachtet.

### Vergleichsbeispiel V 8

Eine Platte wurde wie in Beispiel 1 entfettet und geätzt. Anschließend wurde sie in einer wäßrigen Lösung mit Zusatz von 75 g/l einer 85 %-igen $H_3PO_4$ anodisiert, dabei wurde eine Spannung von 30 V Gleichstrom über einen Zeitraum von 60 sec angelegt. Sofort nach dem Anodisieren wurde die Oberfläche gut abgespült und wie im Vergleichsbeispiel V 6 beschrieben bei erhöhter Temperatur silikatisiert. Alle Prüfungen ergaben im wesentlichen die gleichen Ergebnisse wie bei der Platte aus Vergleichsbeispiel V 6 (einfache Silikatisierung bei erhöhter Temperatur). Die Reaktionszeit beim $SnCl_2$-Versuch betrug 9 sec, ebenso versagte die Platte beim trockenen Einfärben nach 7 Tagen Alterung bei 50°C bzw. nach einstündiger Alterung bei 100°C. Die lichtempfindlich beschichteten Platten versagten nach 30 Tagen Lagerung bei Raumtemperatur und nach 7 Tagen Lagerung bei 50°C. Der einzige festgestellte Vorteil der Anodisierung vor der Silikatisierung bei erhöhter Temperatur bestand in einer höheren Auflage bei Druckversuchen.

### Vergleichsbeiepiel V 9

Es wurde eine Platte nach Vergleichsbeispiel V 4 anodisiert und dann in einer auf 82°C erhitzten, 7 %-igen wäßrigen Natriumsilikatlösung elektrochemisch silikatisiert. Für die Dauer von 60 sec wurde ein Potential von 30 V Gleichstrom angelegt. Die Reaktionszeit im $SnCl_2$-Versuch war 55 sec. Trockenes Einfärben einer frisch hergestellten Platte ergab eine Oberfläche, die sich rasch und leicht sauber abspülen ließ. Bei Raumtemperatur gealterte Platten führten beim trockenen Einfärben nach zehn Wochen zum "Tonen", bei 50°C gealterte Platten tonten nach 19 Tagen. Frisch hergestellte Platten wurden mit einer Lösung einer negativ-arbeitenden lichtempfindlichen Verbindungen gemäß Beispiel 1 beschichtet, nach 19 Wochen Lagerung bei Raumtemperatur wurden die Platten für die Praxis als unbrauchbar eingestuft, die Lagerung bei 50° führte bereits nach 22 Tagen zum Qualitätsverlust. Auch in diesem Fall lag der Vorteil der Nachbehandlung einer anodisierten Platte durch Elektrosilikatisierung weniger in einer Verbesserung der Hydrophilie, als in einer Steigerung der Druckauflage.

### Beispiele 12 und 13

Es wurden Mischungen von organischen Elektrolyten mit einer Gesamtkonzentration von 1,0 % hergestellt, diese Mischungen wurden als Elektrolyten im erfindungsgemäßen Verfahren eingesezt. Die Elektrolyse wurde mit 30 V Gleichstrom über einen Zeitraum von 30 sec bei Raumtemperatur an zuvor entfetteten, mit einer Schleifmittelaufschlämmung gekörnten und geätzten Aluminiumplatten durchgeführt. Die Zusammensetzungen der Elektrolyten, die Schichtgewichte der Oxidschichten, die Reaktionszeiten mit $SnCl_2$ und das Verhalten beim trockenen Einfärbeversuch sind im folgenden aufgeführt. In allen Fällen waren die Korrosionsbeständigkeit und die Hydrophilie sehr gut.

### Beiepiel 12

Elektrolyt 1: 0,5 % Polyvinylphosphonsäure, Elektrolyt 2: 0.5 % Vinylmethylether/Maleinsäure-Copolymerisat, hydrolysiert, Schichtgewicht: 369 mg/m². $SnCl_2$-Test: 117 sec, Färbetest: C.

### Beispiel 13

Elektrolyt 1: 0,75 % Polyacrylsäure, Elektrolyt 2: 0.25 % Polyvinylphosphonsäure, Schichtgewich: 358 mg/m². $SnCl_2$-Test: 134 sec, Färbetest: C

C = ließ sich vollkommen sauber abspülen, für kritische Offsetanwendungen geeignet.

### Vergleichsbeispiel V 10

Ein Abschnitt von Aluminium 3003 wurde gemäß Beispiel 1 entfettet. Die Oberfläche wurde durch die kombinierte Schleifwirkung einer Quarzaufschlämmung mit rotierenden Nylonbürsten mechanisch aufgerauht. Nach dem Aufrauhen wurde das Aluminium gründlich abgewaschen, um sämtliche Quarzpartikel zu entfernen, nach dem Abwaschen mit Wasser wurde das noch feuchte Aluminium in eine auf 65°C erwärmte, 0,2 %-ige wäßrige Polyvinylphosphonsäure-Lösung eingetaucht. Die Behandlungsdauer betrug 60 sec, danach wurde das Aluminium mit Wasser gewaschen und getrocknet. An dieser Probe wurde ein Schichtgewicht von 37 mg/m² festgestellt. Die Reaktionszeit beim Aufbringen von $SnCl_2$ war 6 sec. Auf der frisch hergestellten Platte ließ der Einfärbeversuch im trockenen Zustand auf eine hydrophile Oberfläche schließen, da sich die Farbe durch leichtes Reiben entfernen ließ. Eine bei Raumtemperatur 7 Tage gealterte Platte war nach dem trockenen. Einfärben teilweise getont und beim gleichen Versuch nach 10 Tagen Alterung vollständig getont. Wurde der Träger mit einer negativ-arbeitenden lichtempfindlichen Beschichtung versehen und bei den in Beispiel 1 angegebenen verschiedenen Zeiten und Temperaturen gealtert, war der Hintergrund nicht praxisgerecht, da er ein nicht rückgängig zu machendes "Tonen" aufwies.

### Beispiel 14

Eine Platte wurde wie im Vergleichsbeispiel V 10 beschrieben bearbeitet, mit dem Unterschied, daß die Platte in einer 1 %-igen wäßrigen Polyvinylphosphonsäure-Lösung bei Raumtemperatur und mit 30 V Gleichstrom während 30 sec lang elektrochemisch behandelt wurde, danach wurde die Platte abgespült und trockengetupft. Die Reaktionszeit beim $SnCl_2$-Versuch war 122 sec. Nach dem Chromsäure/Phosphorsäure-Verfahren wurde ein Schichtgewicht von 395 mg/m² gemessen. Der wie in Beispiel 1 beschrieben durchgeführte Einfärbeversuch im trockenen Zustand erbrachte sehr gute Ergebnisse. Das Beschichten mit der gleichsfalls in Beispiel 1 beschriebenen negativ-arbeitenden lichtempfindlichen Schicht, anschließendes Belichten, Entwickeln und Einfärben führte zu einer Platte mit vollkommen sauberem Hintergrund, bei gleichzeitig guter Bildhaftung und hoher Auflösung.

### Beispiel 15

Anstelle der Legierung 3003 wurde die Aluminiumlegierung 1100 genommen und das Verfahren von Beispiel 23 genau wiederholt. Für die Reaktionszeit im $SnCl_2$-Versuch, das Schichtgewicht, den trockenen Einfärbeversuch, den Alterungs- und den Beschichtungsversuch wurden die gleichen Ergebnisse erzielt. Verglichen mit der Probe aus Vergleichsbeispiel V 10 war bei allen Merkmalen eine Verbesserung festzustellen.

### Beispiel 16 und Vergleichbeispiel V 11

Ein Abschnitt der Aluminiumlegierung 3003 wurde entfettet und getrocknet. Die Platte wurde dann in einem trockenen Verfahren unter Verwendung einer rotierenden Bürste mif Stahlborsten (Drahtbürste) mechanisch aufgerauht. Nach dem Aufrauhen wurde die Platte zur Aktivierung der Oberfläche geätzt, abgespült und in ein elektrisch isoliertes Badgefäß mit einer 1 %-igen wäßrigen Polyvinylphosphonsäure-Lösung eingetaucht und während 30 sec mit einem Potential von 30 V Gleichstrom elektrolysiert. Anschließend wurde sie abgespült und trockengetupft. Die elektrolytisch erzeugte Oberfläche widerstand dem aufgebrachten $SnCl_2$ 127 sec. Die elektrolytisch erzeugte Schicht hatte ein Gewicht von 415 mg/m². Vor dem trockenen Einfärben wurden die in Beispiel 1 beschriebenen Alterungsmethoden angewandt, und es zeigte sich, daß die Oberfläche eine gute Hydrophilie besaß, die mit Ablauf der Zeit unverändert blieb. Wenn man eine negativ-arbeitende lichtempfindliche Beschichtungsmasse (wie in Beispiel 1 beschrieben) aufbrachte, so ergab sich ein Fortschritt gegenüber einer in warmer Polyvinylphosphonsäure-Lösung nichtelektrolytisch (0,2 %-ige wäßrige Lösung, 65°C, 60 sec) behandelten Vergleichsprobe, insofern als die Auflösung, die Entwicklerresistenz und die Haftung des Bildes verbessert waren. Außerdem war der Hintergrund wesentlich hydrophiler als bei der Vergleichsprobe.

**Beispiel 17 und Vergleichsbeispiel V 12**

Eine entfettete Platte aus der Aluminiumlegierung 1100 wurde elektrochemisch in Salzsäure aufgerauht und mit Wasser abgespült. Sie wurde gleich anschließend in eine 0,1 %-ige wäßrige Polyvinylphosphonsäure-Lösung eingesetzt und bei Raumtemperatur mit einem Potential von 30 V Gleichstrom während 30 sec elektrolytisch behandelt. Nach der Behandlung wurde die Platte abgespült und trockengetupft. Die entstandene Oberfläche zeigte im $SnCl_2$-Versuch einen Widerstand von 103 sec, und sie hatte ein Schichtgewicht von 396 mg/m$^2$. Von einer frisch hergestellten, trocken eingefärbten Platte ließ sich die Farbe abspülen. Nach der in Beispiel 1 beschriebenen Alterung für den Einfärbeversuch im trockenen Zustand war die auf einem elektrochemisch aufgerauhten Träger erzeugte Oberfläche in allen Fällen zufriedenstellend. Auch beim Aufbringen einer negativ-arbeitenden lichtempfindlichen Beschichtung wie in Beispiel 1 ergab sich eine Verbesserung gegenüber einem elektrochemisch aufgerauhten und in warmer wäßriger Polyvinylphosphonsäure-Lösung behandelten Träger, da die Haftung und die Entwicklerresistenz besser waren.

**Beispiel 18 und Vergleichsbeispiel V 13**

Ein Abschnitt der Aluminiumlegierung 1100 wurde geätzt und elektrochemisch aufgerauht. Die Platte wurde dann abgespült und in ein wäßriges Bad mit einem Gehalt von 150 g/l $H_2SO_4$ (96 %-ig) eingesetzt. Durch Behandlung mit einem elektrischen Potential von 18 V Gleichstrom für die Dauer von 60 sec wurde das Aluminium anodisch oxidiert. Die Platte wurde dann mit Wasser gut abgespült und in ein Bad mit einer 1 %-igen wäßrigen Polyvinylphosphonsäure-Lösung eingesetzt, bei Raumtemperatur wurde während 30 sec ein Potential von 30 V Gleichstrom angelegt. Diese Oberfläche wurde mit einer auf die gleiche Weise hergestellten, jedoch lediglich einer nichtelektrolytischen Wärmebehandlung in wäßriger Polyvinylphosphonsäure-Lösung (0,2 %-ig, 65°C, 60 sec) unterzogenen Platte verglichen. Die Vergleichsplatte hatte ein Schichtgewicht von 2876 mg/m$^2$ und eine $SnCl_2$-Resistenz von 8 sec. Die Versuchsplatte, an der die elektrolytische Behandlung mit wäßriger Polyvinylphosphonsäure-Lösung durchgeführt worden war, hatte ein Schichtgewicht von 2919 mg/m$^2$ und eine auf 114 sec erhöhte Resistenz gegen $SnCl_2$. Beim trockenen Einfärben ewiesen sich die beiden frisch hergestellten Platten als praxisgerecht. Die Vergleichsplatte zeigte jedoch innerhalb kurzer Zeit (weniger als 4 Tage bei Raumtemperatur, 1 Tag bei 50°C und 30 min bei 100°C) einen Verlust an Hydrophilie. Die nach Beispiel 1 lichtempfindlich beschichtete, in wäßriger Polyvinylphosphonsäure-Lösung elektrolytisch behandelte Platte ergab eine bessere Bildhaftung und bessere Entwicklerresistenz als die Vergleichsplatte.

**Beispiele 19 bis 21 und Vergleichsbeispiel V 14**

Plattenproben aus den Aluminiumlegierungen 1100, 3003 und A-19 wurden auf nassem Wege mit einer Quarzaufschlämmung und einer Nylonbürste von Hand aufgerauht und gemäß Beispiel 14 in wäßriger Polyvinylphosphonsäure-Lösung elektrolytisch behandelt. Die Platten wurden dann mit einer negativ arbeitenden Beschichtungslösung gemäß Beispiel 1 beschichtet, sie wurden belichtet, entwickelt und druckfertig gemacht und bis zum Versagen auf einer Bogendruckmaschine laufengelassen. Unter bestimmten Abnutzungsbedingungen (Verschleißfaktor von 2,5) erreichte die Platte aus der Legierung A-19 eine Auflage von 45.000 Exemplaren bis zum Bildzusammenbruch, die Auflage der Platte aus der Legierung 3003 lag bei 36.000 Exemplaren und die der Platte aus der Legierung 1100 bei 29.000 Exemplaren. Eine Vergleichsplatte aus der Legierung 3003, die gemäß Vergleichsbeispiel V 10 in wäßriger Polyvinylphosphonsäure-Lösung nichtelektrolytisch wärmebehandelt, sonst jedoch in der gleichen Weise wie die obengenannten Verauchsplatten bearbeitet worden war, versagte bereits nach 17.000 Abdrucken.

**Beispiele 22 bis 25 und Vergleichsbeispiele V 15 bis 18**

Es wurden mehrere Platten elektrolytisch genau wie in Beispiel 14 beschrieben angefertigt, sie sollten als Träger für verschiedene lichtempfindliche Beschichtungslösungen dienen. Als Vergleichsproben wurden Platten gemäß Vergleichsbeispiel V 10 hergestellt, die in einer warmen wäßrigen Polyvinylphosphonsäure-Lösung nichtelektrolytisch behandelt worden waren. Beschichtung 1 (Beispiel 22) war eine photodimerisierbare Schicht wie sie in US-PS 2 670 286 beschrieben worden ist. Beschichtung 2 (Beispiel 23) war eine photovernetzbare, von Diazoverbindungen freie Schicht auf der Basis von radikalisch polymerisierbaren,

14

polyfunktionellen Acrylharzen, wie sie aus der US-A 3 615 435 bekannt ist. Beschichtung 3 (Beispiel 24) war eine von Diazoverbindungen freie, photopolymerisierbare Schicht nach der US-A 4 161 588. Beschichtung 4 (Beispiel 25) war eine positiv arbeitende Schicht auf der Basis von Diazonaphtholsulfoestern, eine derartige Schicht ist in der US-A 3 046 118 beschrieben. Die Beschichtungen 1, 2 und 3 wurden sowohl auf die Vergleichsplatten (Vergleichsbeispiele V 15 bis V 17) als auch auf die erfindungsgemäß behandelten Platten aufgetragen und unter einer negativen Vorlage in einem üblichen Kopierrahmen mit Metall-Halogenidlampen belichtet. Die Platten wurden (entsprechend ihrer lichtempfindlichen Beschichtung) mit einer in der jeweiligen US-PS vorgeschriebenen Entwicklerlösung entwickelt, eingefärbt und verglichen. Die Bilder auf den Vergleichsplatten waren insgesamt weniger intensiv als das jeweils entsprechende Bild auf den Versuchsplatten, wobei in allen Fällen auf dem Stufenkeil (21-stufiger Stauffer-Keil) zwei Stufen weniger ausbelichtet waren. Auf den Vergleichsplatten waren die Spitzlichter verschwunden, wogegen auf den elektrolytisch behandelten Platten alle Spitzlichter erhalten waren, außerdem war der Hintergrund bei den Vergleichsplatten getont. Bei allen mit wäßriger Polyvinylphosphonsäure-Lösung elektrolytisch behandelten Platten war der Hintergrund sauber.

Die obengenannte positive Beschichtung wurde auf eine Versuchs- und eine Vergleichsplatte (Vergleichsbeispiel V 18) aufgetragen. Unter einer positiven Kopievorlage wurde so belichtet, daß nach dem Entwickeln in einem üblichen alkalischen Entwickler auf dem 21-stufigen Stauffer-Keil zwei vollständig ausbelichtete Stufen sichtbar wurden. Die Vergleichsplatte hatte 2 vollständig ausbelichtete Stufen und 10 angedeutete Keilstufen. Die in wäßriger Polyvinylphosphonsäure-Lösung elektrochemisch behandelte Platte wies 2 vollständig ausbelichtete und 14 angedeutete Keilstufen auf. Auf der Vergleichsplatte waren die Spitzlichter verschwunden, auf der Versuchsplatte dagegen erhalten.

**Beispiele 26 bis 34 und Vergleichsbeispiele V 19 und V 20**

Das Verfahren von Beispiel 14 wurde wiederholt, wobei jedoch die wäßrige Polyvinylphosphonsäure-Lösung eine Konzentration von 0,01 % hatte und die Versuche bei Raumtemperatur durchgeführt wurden. Es wurde mit Behandlungszeiten von 10, 60 und 300 sec, jeweils bei Spannungen von 5,30 und 90 V Gleichstrom gearbeitet. $SnCl_2$-Versuche wurden ausgeführt und die Schichtgewichte der Oxidschicht auf der Oberfläche nach dem Standardverfahren ermittelt. Die entsprechenden Daten sind in Tabelle III aufgeführt.

**Tabelle III**

| Beispiel | Zeit (sec) | Spannung (Volt) | Schichtgewicht $(g/m^2)$ | $SnCl_2$-Test (sec) |
|---|---|---|---|---|
| 26 | 10 | 5 | 0,016 | 2 |
| 27 | 10 | 30 | 0,021 | 4 |
| 28 | 10 | 90 | 0,027 | 6 |
| 29 | 60 | 5 | 0,024 | 3 |
| 30 | 60 | 30 | 0,023 | 5 |
| 31 | 60 | 90 | 0,035 | 17 |
| 32 | 300 | 5 | 0,031 | 4 |
| 33 | 300 | 30 | 0,031 | 8 |
| 34 | 300 | 90 | 0,037 | 41 |

Jede der nach den Bedingungen von Tabelle III hergestellten Platten wurde durch trockenes Einfärben sowie durch Alterung und anschließendes trockenes Einfärben nach dem Verfahren von Beispiel 1 auf ihre Hydrophilie geprüft und mit Vergleichsplatten (V 19 und V 20) verglichen, die nach den Vergleichsbeispielen V 3 und V 5 hergestellt worden waren. In allen Fällen ließ sich die Farbe von den Platten nach Beispielen 26 bis 34 vollständig abspülen, wogegen die Vergleichsplatten nicht ganz sauber abgespült werden konnten oder abgerieben werden mußten, um die Farbe zu entfernen. Die Ergebnisse zeigen, daß nach dem erfindungsgemäßen Verfahren hergestellte Oxidschichten selbst bei einem Schichtgewicht von nur 0,016 $g/m^2$ (10 sec, 5 V) eine ausgezeichnete Hydrophilie besitzen. Eine in der Tabelle I nicht aufgeführte Schicht von 0,008 $g/m^2$, die bei 5 V Gleichstrom in 1 sec erzeugt worden war, hatte im gleichen Versuch eine ebenso gute Hydrophilie, eine gute Korrosionsfeuchtigkeit ist mit der etwas niedrigen Elektrolytkonzentration gleichzeitig allerdings nicht zu erzielen.

**Beispiele 35 bis 43**

Es wurde nach dem Verfahren der Beispiele 26 bis 34 gearbeitet, mit dem Unterschied, daß die Elektrolytkonzentration auf 0,1 % erhöht wurde. Die Ergebnisse sind der Tabelle IV zu entnehmen. Aus der Tabelle wird ersichtlich, daß entweder längere Elektrolysezeiten oder höhere Spannungen bei dieser Konzentration zu einer gesteigerten Korrosionsfestigkeit führen. Wie in den Beispielen 26 bis 34 zeigten alle Schichten, verglichen mit den Vergleichsplatten der Vergleichsbeispiele V 19 und V 20, ein hohes Maß an Hydrophilie im trockenen Einfärbeversuch und im Alterungsversuch.

**Tabelle IV**

| Beispiel | Zeit (sec) | Spannung (Volt) | Schichtgewicht (g/m$^2$) | SnCl$_2$-Test (sec) |
|---|---|---|---|---|
| 35 | 10 | 5 | 0,043 | 11 |
| 36 | 10 | 30 | 0,110 | 12 |
| 37 | 10 | 90 | 0,157 | 24 |
| 38 | 60 | 5 | 0,050 | 14 |
| 39 | 60 | 30 | 0,163 | 18 |
| 40 | 60 | 90 | 0,202 | 49 |
| 41 | 300 | 5 | 0,051 | 14 |
| 42 | 300 | 30 | 0,198 | 18 |
| 43 | 300 | 90 | 0,222 | 44 |

**Beispiele 44 bis 72**

Das Verfahren der Beispiele 26 bis 34 wurde wiederholt, in diesen Beispielen wurde die Elektrolytkonzentration jedoch auf 1,0 % erhöht. Außerdem wurden noch Platten in Zeiträumen von 20, 40 und 80 sec bei 30 und 60 V Gleichspannung elektrolytisch behandelt. Die Ergebnisse sind in der Tabelle V nach Behandlungsdauer gestaffelt angegeben (Schichtgewicht und Reaktionszeit im SnCl$_2$-Versuch). Jede der in 20, 40 und 80 Sekunden behandelten Platten wurde als Träger für Druckversuche eingesetzt.

**Tabelle V**

| Beispiel | Zeit (sec) | Spannung (Volt) | Schichtgewicht (g/m$^2$) | SnCl$_2$-Test (sec) |
|---|---|---|---|---|
| 44 | 1 | 5 | 0,043 | 7 |
| 45 | 1 | 30 | 0,217 | 26 |
| 46 | 1 | 60 | 0,398 | 73 |
| 47 | 1 | 90 | 0,547 | 136 |
| 48 | 5 | 30 | 0,271 | 31 |
| 49 | 5 | 60 | 0,461 | 98 |
| 50 | 10 | 5 | 0,083 | 19 |
| 51 | 10 | 30 | 0,373 | 85 |
| 52 | 10 | 60 | 0,592 | 120 |
| 53 | 10 | 90 | 0,782 | 165 |
| 54 | 20 | 30 | 0,385 | 103 |
| 55 | 20 | 60 | 0,620 | 134 |
| 56 | 30 | 5 | 0,088 | 21 |
| 57 | 30 | 30 | 0,396 | 122 |
| 58 | 30 | 60 | 0,648 | 148 |
| 59 | 30 | 90 | 0,861 | 173 |
| 60 | 40 | 30 | 0,414 | 125 |
| 61 | 40 | 60 | 0,654 | 164 |
| 62 | 60 | 5 | 0,093 | 20 |
| 63 | 60 | 30 | 0,431 | 128 |
| 64 | 60 | 60 | 0,661 | 180 |
| 65 | 60 | 90 | 0,873 | 190 |
| 66 | 80 | 30 | 0,430 | 129 |
| 67 | 80 | 60 | 0,694 | 208 |
| 68 | 120 | 30 | 0,430 | 130 |
| 69 | 120 | 60 | 0,724 | 237 |
| 70 | 300 | 30 | 0,431 | 91 |
| 71 | 300 | 60 | 0,758 | 191 |
| 72 | 300 | 90 | 0,902 | 213 |

Wie in den Beispielen 26 bis 34, erwiesen sich alle in der Tabelle V aufgeführten Platten beim trockenen Einfärben und in den Alterungsversuchen als in hohem Maße hydrophil.

**Beispiele 73 bis 81**

Es wurde nach dem Verfahren der Beispiele 26 bis 34 gearbeitet, wobei allerdings die Elektrolytkonzentration 5,0 % betrug. Die Ergebnisse sind in der Tabelle VI aufgeführt.

**Tabelle VI**

| Beispiel | Zeit (sec) | Spannung (Volt) | Schichtgewicht $(g/m^2)$ | $SnCl_2$-Test (sec) |
|---|---|---|---|---|
| 73 | 10 | 5 | 0,122 | 21 |
| 74 | 10 | 30 | 0,417 | 181 |
| 75 | 10 | 90 | 0,779 | 412 |
| 76 | 60 | 5 | 0,288 | 44 |
| 77 | 60 | 30 | 0,545 | 315 |
| 78 | 60 | 90 | 0,936 | 701 |
| 79 | 300 | 5 | 0,389 | 63 |
| 80 | 300 | 30 | 0,690 | 313 |
| 81 | 300 | 90 | 1,069 | 767 |

Alle Platten der Tabelle VI waren bei trockenen Einfärbeversuchen und Alterungsversuchen in hohem Maße hydrophil.

**Beispiele 82 bis 90**

Es wurde nach dem Verfahren der Beispiele 26 bis 34 gearbeitet, wobei die Elektrolytkonzentration allerdings 10,0 % betrug. Die Ergebnisse sind in der Tabelle VII aufgeführt.

**Tabelle VII**

| Beispiel | Zeit (sec) | Spannung (Volt) | Schichtgewicht $(g/m^2)$ | $SnCl_2$-Test (sec) |
|---|---|---|---|---|
| 82 | 10 | 5 | 0,156 | 13 |
| 83 | 10 | 30 | 0,431 | 81 |
| 84 | 10 | 90 | 0,832 | 166 |
| 85 | 60 | 5 | 0,299 | 23 |
| 86 | 60 | 30 | 0,558 | 118 |
| 87 | 60 | 90 | 1,012 | 256 |
| 88 | 300 | 5 | 0,417 | 27 |
| 89 | 300 | 30 | 0,701 | 112 |
| 90 | 300 | 90 | 1,046 | 244 |

Alle Platten der Tabelle VII waren in den trockenen Einfärbeversuchen und Alterungsverfahren in hohem Maße hydrophil.

**Beispiele 91 bis 99**

Das Verfahren der Beispiele 26 bis 34 wurde wiederholt, jedoch mit einer Elektrolytkonzentration von 30 %. Die Ergebnisse sind in der Tabelle VIII aufgeführt.

**Tabelle VIII**

| Beispiel | Zeit (sec) | Spannung (Volt) | Schichtgewicht (g/m$^2$) | SnCl$_2$-Test (sec) |
|---|---|---|---|---|
| 91 | 10 | 5 | 0,162 | 8 |
| 92 | 10 | 30 | 0,429 | 93 |
| 93 | 10 | 90 | 0,853 | 158 |
| 94 | 60 | 5 | 0,311 | 19 |
| 95 | 60 | 30 | 0,569 | 117 |
| 96 | 60 | 90 | 1,041 | 246 |
| 97 | 300 | 5 | 0,381 | 19 |
| 98 | 300 | 30 | 0,727 | 118 |
| 99 | 300 | 90 | 1,087 | 237 |

Alle Platten aus Tabelle VIII waren in den trockenen Einfärbeversuchen und Alterungsversuchen in hohem Maße hydrophil.

**Beispiele 100 bis 110**

Es wurde nach dem Verfahren der Beispiele 26 bis 34 gearbeitet (1,0 %-ige wäßrige Polyvinylphosphonsäure-Lösung), wobei allerdings die Temperatur 10°C betrug. Die Ergebnisse sind in Tabelle IX aufgeführt.

**Tabelle IX**

| Beispiel | Zeit (sec) | Spannung (Volt) | Schichtgewicht (g/m$^2$) | SnCl$_2$-Test (sec) |
|---|---|---|---|---|
| 100 | 1 | 30 | 0,222 | 42 |
| 101 | 5 | 30 | 0,282 | 66 |
| 102 | 10 | 5 | 0,084 | 47 |
| 103 | 10 | 30 | 0,368 | 98 |
| 104 | 10 | 90 | 0,802 | 197 |
| 105 | 60 | 5 | 0,093 | 66 |
| 106 | 60 | 30 | 0,453 | 137 |
| 107 | 60 | 90 | 0,901 | 263 |
| 108 | 300 | 5 | 0,099 | 77 |
| 109 | 300 | 30 | 0,469 | 132 |
| 110 | 300 | 90 | 0,943 | 253 |

Alle Platten aus Tabelle IX waren in den trockenen Einfärbeversuchen und Alterungsversuchen in hohem Maße hydrophil.

**Beispiele 111 bis 121**

Es wurde nach dem Verfahren der Beispiele 26 bis 34 gearbeitet, die Temperatur betrug jedoch 40°C.

**Tabelle X**

| Beispiel | Zeit (sec) | Spannung (Volt) | Schichtgewicht (g/m²) | SnCl₂-Test (sec) |
|---|---|---|---|---|
| 111 | 1 | 30 | 0,181 | 9 |
| 112 | 5 | 30 | 0,201 | 17 |
| 113 | 10 | 5 | 0,079 | 13 |
| 114 | 10 | 30 | 0,311 | 36 |
| 115 | 10 | 90 | 0,742 | 95 |
| 116 | 60 | 5 | 0,090 | 13 |
| 117 | 60 | 30 | 0,417 | 59 |
| 118 | 60 | 90 | 0,857 | 171 |
| 119 | 300 | 5 | 0,098 | 13 |
| 120 | 300 | 30 | 0,450 | 54 |
| 121 | 300 | 90 | 0,867 | 198 |

Alle Platten der Tabelle X waren bei den trockenen Einfärbeversuchen und Alterungsversuchen in hohem Maße hydrophil.

**Beispiele 122 bis 133 und Vergleichsbeispiele V 21 bis V 23**

An einigen der in den vorstehenden Beispielen angefertigten Platten (mit der lichtempfindlichen Beschichtung des Beispiels 1) wurden Druckversuche durchgeführt. Dabei arbeitete man in allen Fällen mit einer handelsüblichen "Solna"-Bogendruckpresse mit "Dahlgren"-Feuchtwerk unter Verwendung eines Feuchtwassers eines pH-Wertes von 3,9 bis 4,0. Die Platten wurden verstärkt unterlegt und mit einer Druckfarbe mit starken Abriebeigenschaften bedruckt, so daß die normale Verschleißrate um den Faktor 2,4 erhöht war, es wurde handelsübliches Papier verwendet. In der nachfolgenden Tabelle XI geben die Zahlen an, wann die Punktverkleinerung und Verschiebung der Farbannahme auf dem Stufenkeil einsetzte, nicht jedoch den Zeitpunkt, an dem die Platte unbrauchbar wird.

**Tabelle XI**

| Beispiel | Platte aus Beispiel Nr. | Verfahrensbedingungen | Punkt-verklei-nerung | Verschiebung der Farb-annahme auf Stufenkeil | Versuchs-ende nach x · 1000 Abzügen |
|---|---|---|---|---|---|
| Vergleichs-beispiel V 21 | Vergleichs-beispiel V 10 | mit Aufschlämmung gekörnt, therm. Reaktionsbehandlung mit 0,2 %-iger wäßriger Poly-vinylphosphonsäure-Lösung | 50 | 20 | 105 |
| 122 | Tabelle V | 30 V, 60 sec | -*) | -*) | 105 |
| 123 | Tabelle V | 60 V, 60 sec | 95 | 90 | 105 |
| 124 | Tabelle V | 30 V, 20 sec | 80 | 50 | 105 |
| 125 | Tabelle V | 30 V, 40 sec | 100 | 80 | 105 |
| 126 | Tabelle V | 30 V, 80 sec | -*) | -*) | 105 |
| Vergleichs-beispiel V 22 | Vergleichs-beispiele V 5 u. V 10 | mit Aufschlämmung gekörnt, mit H₂SO₄ anodisiert (1000 mg/m²) | 80 | 75 | 210 |
| Vergleichs-beispiel V 23 | Vergleichs-beispiele V 5 u. V 10 | wie V 22, anodische Schicht jedoch 3000 mg/m² | 90 | 95 | 210 |
| 127 | Tabelle V | 60 V, 20 sec | 85 | 65 | 105 |
| 128 | Tabelle V | 60 V, 40 sec | 80 | 60 | 105 |
| 129 | Tabelle V | 60 V, 80 sec | 75 | 60 | 105 |
| 130 | Tabelle V | 10 V, 30 sec | 110 | 100 | 110 |
| 131 | Tabelle V | 20 V, 30 sec | 105 | 90 | 110 |
| 132 | Tabelle V | 40 V, 30 sec | 90 | 85 | 110 |
| 133 | Tabelle V | 30 V, 30 sec | 125 | 180 | 210 |

*) Auch bei Versuchsende keine Beschädigung.

Bei den Vergleichsbeispielen V 21, V 22 und V 23 handelt es sich um Vergleichsplatten, die alle mit einem gewissen Erfolg im Handel sind. Die erfindungsgemäßen Platten haben die beste der Vergleichsplatten (V 23) in sieben Fällen in bezug auf die Beständigkeit gegen Punktverkleinerung und in vier Fällen in bezug auf die Verschiebung der Farbannahme auf dem Stufenkeil übertroffen. Die erfindungsgemäßen Platten waren in neun Fällen bei der Beständigkeit gegen Punktverkleinerung und in sieben Fällen bei der Verschiebung der Farbannahme auf dem Stufenkeil besser als die Vergleichsplatte (V 22) einer mittleren Qualität. Die relativ schlechteste der Vergleichsplatten (V 21) wurde in zwölf Fällen in bezug auf die Beständigkeit gegen Punktverkleinerung und in zwölf Fällen in bezug auf die Verschiebung der Farbannahme auf dem Stufenkeil von den erfindungsgemäßen Platten übertroffen.

**Beispiel 134**

In einer 1 %-igen wäßrigen Lösung von Vinylmethylether/Maleinsäure-Copolymerisat wurde nach einem Verfahren in Analogie zu Beispiel 1 eine anodische Oxidschicht aufgebaut. Die Untersuchung der isolierten Oxidschicht bei 55 000-facher Vergrößerung unter dem Durchstrahlungs-Elektronenmikroskop ergab eine glatte Oberfläche ohne sichtbare Porosität.

**Beispiel 135 und Vergleichsbeispiel V 24**

Flächige Proben aus der Aluminium-Legierung 3003 mit den Abmessungen 18,3 cm · 17,8 cm · 0,03 cm wurden für die elektrolytische Behandlung nach den Angaben des Beispiels 1 vorbereitet. Nach dem Ätzen (während 10 bis 15 sec) wurde eine Probe mit Wasser abgewaschen und im Luftstrom getrocknet. Die Probe wurde an eine leitfähige Schiene angeklemmt und im Abstand von jeweils etwa 20 cm zwischen zwei Bleiplatten in eine isolierte Wanne eingehängt. Die Wanne enthielt eine wäßrige Lösung mit einem Gehalt von 50 g/l $H_2SO_4$, 50 g/l $H_3PO_4$ und 0,5 % Polyvinylphosphonsäure (PVPS). Mittels einer Gleichspannungsquelle wurden das Aluminium als Anode und die Bleielektroden als Kathoden geschaltet. Das Bad hatte Umgebungstemperatur, blieb jedoch für die Dauer des Versuchs auf 22°C $\pm$ 2°C. Der Strom wurde mit einer voreingestellten Gleichspannung von 10 V eingeschaltet, die Elektrolysebehandlung dauerte 60 sec. Am Anfang stieg die Stromstärke auf 5 A, sie fiel jedoch sehr rasch auf 1 bis 2 A ab und blieb für die Dauer der Behandlung auf diesem Niveau. Der Kontakt wurde unterbrochen, die Platte aus dem Bad genommen, mit Wasser abgespült und abschließend trockengetupft. Die Aluminiumoxidschicht auf der Oberfläche hatte ein Gewicht von 108 mg/m²; dieses Gewicht wurde durch Gravimetrie vor und nach dem Entschichten mit einer Chromsäure/Phosphorsäurelösung bestimmt. Um die Hydrophilie der Oberfläche zu prüfen, wurde eine Druckfarbe mit starken Abriebeigenschaften ohne Verwendung von Wasser mit einem trockenen Applikator aufgetragen. Die Platte war wesentlich sauberer als herkömmlich hergestellte Platten, wenn sie sofort trocken eingefärbt und mit Wasser abgewaschen wurden. Auf die Oberfläche wurden einige Tropfen Kaliumzinkat-Lösung gegeben, die Testdauer betrug 35 bis 40 sec bis zum Umschlagspunkt. An herkömmlich in $H_2SO_4$ anodisierten und in warmer wäßriger Polyvinylphosphonsäure-Lösung nichtelektrolytisch behandelten Platten dauerte dieser Versuch dagegen 25 bis 30 sec.

Schließlich wurde die Platte noch mit einer lichtempfindlichen Lösung beschichtet, die ein Pigment, ein Polyvinylformal-Bindemittel und ein Diazonium-Kondensationsprodukt gemäß der US-A 3 867 147 enthielt. Nach Belichten durch eine Negativvorlage und Entwickeln mit einem wäßrig-alkoholischen Entwickler blieben der Hintergrund sauber und ein intensives Bild in den belichteten Bereichen zurück. Mit einem 21-stufigen Stauffer-Stufenkeil wurde so belichtet, daß nach dem Entwickeln mit einem wäßrig-alkoholischen Entwickler 6 Stufen voll geschwärzt waren. Die Untersuchung der isolierten Aluminiumoxidschicht bei 55 000-facher Vergrößerung unter dem Durchstrahlungs-Elektronenmikroskop zeigte eine glatte Oberfläche ohne sichtbare Porosität.

**Vergleichsbeispiel V 25**

Es wurde eine Platte in der gleichen Weise wie in Beispiel 135 hergestellt, der wäßrige Elektrolyt enthielt jedoch nur Phosphorsäure in einer Menge von 75 g/l und keine mehrbasische organische Säure. Nach der Behandlung mit 30 V Gleichstrom für die Dauer von 60 sec erhielt man eine Platte mit einem Oxidgewicht von 871 mg/m². Der Umschlagspunkt beim Kaliumzinkat-Versuch trat nach etwa 2 min ein, und beim trockenen Einfärben ergab sich eine stark getonte Platte. Das Auftragen der lichtempfindlichen Schicht nach Beispiel 135, anschließendes Belichten, Entwickeln in einem wäßrig-alkoholischen Entwickler und Einfärben führte zu einer getonten Platte.

**Vergleichsbeispiel V 26**

Eine Platte wurde wie im Vergleichsbeispiel V 25 hergestellt. Nach der Entnahme aus dem Anodisierungsbad wurde die Platte abgespült und 30 sec in ein 65°C warmes wäßriges Bad mit einem Gehalt von 0,2 % PVPS eingetaucht, im Anschluß an diese Behandlung wurde die Platte abgespült und trockengetupft; das Oxidgewicht der Platte betrug 909 mg/m². Der Umschlagspunkt beim Kaliumzinkat-Versuch trat nach etwa 2 min ein, nach dem trockenen Einfärben der Platte ließ sich die Druckfarbe nur schwer entfernen, und einige Bereiche blieben getont. Wenn der Träger mit der im Beispiel 135 beschriebenen lichtempfindlichen Lösung beschichtet, belichtet, entwickelt und eingefärbt worden war, zeigte es sich, daß die Platte nur bei ausreichender Befeuchtung vor dem Einfärben praxisgerecht war.

**Beispiel 136**

Es wurde eine Platte wie in Beispiel 135 beschrieben entfettet und geätzt. Die geätzte Platte wurde in ein wäßriges Bad mit einem Gehalt von 63 g/l $H_2SO_4$, 37 g/l $H_3PO_4$ und 1 % PVPS eingetaucht. Die Elektrolyse für die Dauer von 30 sec bei 15 V (anfangs 10 A, die innerhalb von 5 sec auf 1 bis 2 A abfielen) ergab eine Aluminiumoxidschicht mit einem Gewicht von 500 mg/m², der Kaliumzinkat-Versuch dauerte 42 sec und die trocken eingefärbte Probe konnte mit einem angefeuchteten Applikator ziemlich gut gereinigt werden. Nach Beispiel 135 lichtempfindlich beschichtete Proben ließen sich mit einem wäßrig-alkoholischen Entwickler sauber entwickeln. Die Untersuchung der isolierten Aluminiumoxidschicht unter dem Durchstrahlungs-Elektronenmikroskop zeigte eine glatte Oberfläche, die frei von Poren war.

**Beispiel 137**

Wie in Beispiel 135 beschrieben wurde eine Platte entfettet und geätzt. Die geätzte Platte wurde in ein wäßriges Bad mit einem Gehalt von 23 g/l $H_3PO_4$ und 0,25 % PVPS eingetaucht. Die elektrolytische Behandlung für die Dauer von 60 sec bei 30 V Gleichstrom führte zu einer Aluminiumoxidschicht mit einem Gewicht von 198 mg/m². Die Untersuchung der isolierten Aluminiumoxidschicht unter dem Durchstrahlungs-Elektronenmikroskop zeigte eine im wesentlichen strukturlose Oberfläche mit einigen Unterbrechungen.

**Beispiel 138**

Eine Platte wurde gemäß Beispiel 135 entfettet und geätzt. Die Probe wurde in einem wäßrigen Bad mit einem Gehalt von 23 g/l $H_3PO_4$ und 0,6 % PVPS elektrolytisch behandelt, diese Behandlung dauerte 60 sec bei 20 V Gleichstrom und führte zu einer Aluminiumoxidschicht von 101 mg/m². Für diese Probe wurde eine Zeit von 250 sec beim Kaliumzinkat-Versuch verzeichnet. Nach dem trockenen Einfärben ließ sich die Platte ziemlich leicht mit einem angefeuchteten Applikator reinigen, und die nach Beispiel 135 lichtempfindlich beschichteten Proben ließen sich im Anschluß an die Belichtung durch ein Negativ mit einem wäßrig-alkoholischen Entwickler leicht entwickeln. Bei 55 000-facher Vergrößerung unter dem Durchstrahlungs-Elektronenmikroskop zeigte die isolierte Schicht eine glatte, gleichmäßige Oberfläche ohne sichtbare Porosität.

**Beispiel 139**

Eine Platte wurde gemäß Beispiel 135 entfettet und geätzt. Die Probe wurde 60 sec bei 15 V Gleichstrom in einem wäßrigen Bad mit einem Gehalt von 75 g/l $H_2SO_4$, 25 g/l $H_3PO_4$ und 0,5 % PVPS elektrolytisch behandelt, wobei sich eine Aluminiumoxidschicht von 500 mg/m² aufbaute. Der Umschlagspunkt beim Kaliumzinkat-Versuch trat nach 30 bis 35 sec ein. Eine trocken eingefärbte Platte ließ sich durch kräftiges Abreiben mit einem feuchten Baumwollapplikator leicht reinigen. Belichtete und mit wäßrig-alkoholischem Entwickler entwickelte, nach Beispiel 150 lichtempfindlich beschichtete Platten waren ziemlich sauber und frei von "Tonen", ihre Lagerfähigkeit war jedoch begrenzt. Die Untersuchung unter dem Durchstrahlungs-Elektronenmikroskop bei 55 000-facher Vergrößerung zeigte eine beginnende Porosität.

**Beispiel 140**

Die Probe wurde wie in Beispiel 135 hergestellt und elektrolytisch behandelt, mit dem Unterschied, daß die Elektrolyse für die Dauer von 60 sec bei 25 V Gleichstrom durchgeführt wurde (die Stromstärke betrug zu Beginn 25 A und fiel rasch auf 2A ab, diese Stromstärke blieb dann für die Dauer der Behandlung konstant). Die Aluminiumoxidschicht hatte ein Gewicht von 522 mg/m². Im drucktechnischen Verhalten war diese Platte mit der Platte aus Beispiel 135 vergleichbar.

**Beispiel 141**

Eine Probe wurde gemäß Beispiel 140 hergestellt und elektrolytisch behandelt, wobei allerdings die Behandlungszeit 120 sec betrug. Die Aluminiumoxidschicht hatte ein Gewicht von 1085 mg/m². Im drucktechnischen Verhalten war diese Platte mit der Platte aus Beispiel 135 vergleichbar.

**Beispiel 142**

Es wurde eine Platte gemäß Beispiel 135 entfettet und geätzt. Die Platte wurde innerhalb von 60 sec bei 16 V Gleichstrom in einem wäßrigen Bad mit einem Gehalt von 100 g/l $H_3PO_4$ und 1 % PVPS elektrolytisch behandelt, wobei eine Aluminiumoxidschicht von 113 mg/m² entstand, der Umschlagspunkt bei Kaliumzinkat-Versuch war nach 90 sec erreicht. Nach dem trockenen Einfärben konnte die Platte durch Abspülen mit Wasser und leichtes Überwischen mit einem Baumwollapplikator sehr leicht gereinigt werden. Eine Platte, die mit der in Beispiel 136 beschriebenen Diazoniummasse beschichtet worden war, ließ sich nach dem Belichten sauber und einwandfrei mit einem wäßrig-alkoholischen Entwickler entwickeln.

**Beispiel 143**

Es wurde eine Platte gemäß Beispiel 136 hergestellt, die Elektrolysespannung betrug in diesem Fall jedoch 50 V Gleichstrom. Die fertige Platte war in ihrem drucktechnischen Verhalten mit der Platte aus Beispiel 136 vergleichbar.

**Beispiel 144**

Es wurde eine Platte gemäß Beispiel 136 hergestellt, die Temperatur bei der Elektrolyse war jedoch 40°C. Die fertige Platte war in ihrem drucktechnischen Verhalten mit der Platte aus Beispiel 136 vergleichbar.

**Patentansprüche**

1. Verfahren zur Herstellung von Druckplatten mit platten-, folien- oder bandförmigem Aliminium oder Aluminiumlegierungen als Trägermaterial, wobei das Trägermaterial einer anodischen Oxidation in einem wäßrigen, mindestens eine mehrbasische organische Säure enthaltenden Elektrolyten, gegebenenfalls nach vorhergehender mechanischer, chemischer und/oder elektrochemischer Aufrauhung, unterworfen wird, dadurch gekennzeichnet, daß die mehrbasische organische Säure mindestens fünf Säurefunktionen aufweist und eine wasserlösliche polymere Phosphon- oder Carbonsäure oder Polyvinylsulfonsäure ist.

2. Verfahren nach Anspruch 1, dadurch gekennzeichnet, daß der wäßrige Elektrolyt 0,05 bis 30 Gew.-% der mehrbasischen, polymeren organischen Säure(n) enthält.

3. Verfahren nach Anspruch 1 oder 2, dadurch gekennzeichnet, daß der wäßrige Elektrolyt mindestens 0,5 Gew.-% der mehrbasischen, polymeren organischen Säure(n) enthält.

4. Verfahren nach einem der Ansprüche 1 bis 3, dadurch gekennzeichnet, daß der wäßrige Elektrolyt zusätzlich eine anorganische Säure aus der Gruppe Phosphorsäure, Phosphorige Säure und einem Gemisch aus Phosphorsäure und Schwefelsäure oder Phosphoriger Säure enthält.

5. Verfahren nach Anspruch 4, dadurch gekennzeichnet, daß der wäßrige Elektrolyt 10 bis 200 g/l,

# 0 048 909

insbesondere 20 bis 150 g/l, der anorganischen Säure(n) enthält.

6. Verfahren nach einem der Ansprüche 1 bis 5, dadurch gekennzeichnet, daß vor der anodischen Oxidation in dem eine mehrbasische, polymere organische Säure enthaltenden Elektrolyten zusätzlich eine anodische Oxidation in wäßriger Schwefelsäure-Lösung als Elektrolyten durchgeführt wird.

7. Verfahren nach einem der Ansprüche 1 bis 3 oder 6, dadurch gekennzeichnet, daß die anodische Oxidation mit einer Spannung von 1 bis 30 V, bei einer Stromdichte von 1 bis 5 A/dm², in einer Zeitspanne von 0,08 bis 5 min und bei einer Temperatur von -2°C bis 60°C durchgeführt wird.

8. Verfahren nach einem der Ansprüche 1 bis 3, 6 oder 7, dadurch gekennzeichnet, daß die anodische Oxidation mit einer Spannung von mindestens 5 V, bei einer Stromdichte von 1,3 bis 4,3 A/dm², in einer Zeitspanne von 0,16 bis 1 min und bei einer Temperatur von 10°C bis 35°C durchgeführt wird.

9. Verfahren nach Anspruch 4 oder 5, dadurch gekennzeichnet, daß die anodische Oxidation mit einer Spannung von 5 bis 40 V, bei einer Stromdichte von 0,2 bis 6 A/dm², in einer Zeitspanne von 0,08 bis 5 min und bei einer Temperatur von -2°C bis 60°C durchgeführt wird.

10. Verfahren nach einem der Ansprüche 1 bis 9, dadurch gekennzeichnet, daß mindestens eine mehrbasische, polymere organische Säure eine polymere Phosphonsäure ist.

11. Verfahren nach einem der Ansprüche 1 bis 9, dadurch gekennzeichnet, daß als mehrbasische, polymere Phosphon- oder Carbonsäure, hydrolysierte Copolymere von Methylvinylether und Maleinsäureanhydrid, Copolymere von Methylvinylether und Maleinsäure, Polyvinylphosphonsäure, Poly-2-ethyl-hexan-phosphonsäure, Polyacrylsäure, Polymethacrylsäure, oder ein Gemisch aus zwei oder mehreren dieser organischen Säuren eingesetzt wird.

12. Verfahren nach einem der Ansprüche 1 bis 11, dadurch gekennzeichnet, daß mindestens eine menrbasische, polymere organische Säure Polyvinylphosphonsäure ist.

13. Verwendung des nach dem Verfahren gemäß einem der Ansprüche 1 bis 12 hergestellten Trägermaterials bei der Herstellung von eine lichtempfindliche Schicht tragenden Druckplatten.

14. Verwendung nach Anspruch 13, dadurch gekennzeichnet, daß die gegebenenfalls angefärbten lichtempfindlichen Schichten Diazoverbindungen, Diazochinone, Diazomischkondensate oder photopolymerisierbare Verbindungen enthalten.

## Claims

1. A process for the production of printing plates using a support material in the form of sheets, foils or strips, comprising aluminum or aluminum alloys, the support material being subjected to an anodic oxidation treatment in an aqueous electrolyte which contains at least one polybasic organic acid, if appropriate after a preceding mechanical, chemical and/or electrochemical roughening treatment, wherein the polybasic organic acid has at least five acid functions and comprises a water-soluble polymeric phosphonic or carboxylic acid or polyvinyl sulfonic acid.

2. A process to claim 1, wherein the aqueous electrolyte contains from 0.05 to 30 % by weight of the polybasic, polymeric organic acid(s).

3. A process according to claim 1 or claim 2. wherein the aqeuous electrolyte contains at least 0.5 % by weight of the polybasic, polymeric organic acid(s).

4. A process according to any of the claims 1 to 3, wherein the aqueous electrolyte additionally contains inorganic acid(s), selected from the group consisting of phosphoric acid, phosphorous acid and a mixture of phosphoric acid and sulfuric acid or phosphorous acid.

5. A process according to claim 4, wherein the aqueous electrolyte contains from 10 to 200 g/l, particularly from 20 to 150 g/l, of the inorganic acid(s).

6. A process according to any of claims 1 to 5, wherein an anodic oxidation in an electrolyte comprising an aqueous solution of sulfuric acid is additionally carried out, before the anodic oxidation in the electrolyte containing a polybasic, polymeric organic acid.

7. A process according to any of claims 1 to 3 or 6, wherein the anodic-oxidation is carried out at a voltage from 1 to 30 volts, a current density from 1 to 5A/dm², during a period of time from 0.08 to 5 minutes and at a temperature from -2°C to 60°C.

8. A process according to any of claims 1 to 3, 6 or 7, wherein the anodic oxidation is carried out at a voltage of at least 5 volts, a current density from 1.3 to 4.3 A/dm², during a period of time from 0.16 to 1 minute and at a temperature from 10°C to 35°C.

9. A process according to claim 4 or claim 5, wherein the anodic oxidation is carried out at a voltage from 5 to 40 volts, a current density from 0.2 to 6 A/dm², during a period of time from 0.08 to 5 minutes and at a temperature from -2°C to 60°C.

10. A process according to any of claims 1 to 9, wherein at least one of the polybasic, polymeric organic acids is a polymeric phosphonic acid.

11. A process according to any of claims 1 to 9, wherein the polybasic, polymeric phosphonic or carboxylic acid used is/are hydrolized copolymers of methylvinyl ether and maleic anhydride, copolymers of methylvinyl ether and maleic acid, polyvinyl phosphonic acid, poly-2-ethylhexane phosphonic acid, polyacrylic acid, polymethacrylic acid, or a mixture comprising at least two of said organic acids.

23

12. A process according to any of claims 1 to 11, wherein at least one of said polybasic, polymeric organic acids is polyvinyl phosphonic acid.

13. Use of the support material which has been manufactured according to any of claims 1 to 12, in the production of printing plates carrying a light-sensitive layer.

14. Use according to claim 13, wherein the optionally dyed light-sensitive layers contain diazo compounds, diazo quinones, diazo mixed condensates or photopolymerizable compounds.

**Revendications**

1. Procédé pour la fabrication de plaques d'impression d'un matériau de support d'aluminium ou de ses alliages en forme de plaques, de feuilles ou de bandes, le matériau de support étant soumis à un traitement d'oxydation anodique dans un électrolyte aqueux contenant au moins un acide organique polybasique, éventuellement après avoir rendu au préalable le matériau rugueux par voie mécanique, chimique et/ou electrochimique, procédé caractérisé en ce que l'acide organique polybasique possède au moins 5 fonctions acide et est un polymère d'acide phosphonique ou carboxylique ou d'acide polyvinylsulfonique, soluble dans l'eau.

2. Procédé selon la revendication 1, caractérisé en ce que l'électrolyte aqueux contient de 0,05 à 30 % en poids du ou des acide(s) organique(s) polymère(s), polybasique(s).

3. Procédé selon l'une des revendications 1 et 2, caractérisé en ce que l'électrolyte aqueux contient au moins 0,5 % en poids du ou des acide(s) organique(s) polymère(s), polybasique(s).

4. Procédé selon l'une quelconque des revendications 1 à 3, caractérisé en ce que l'électrolyte aqueux contient en outre un acide minéral choisi parmi l'acide phosphorique, l'acide phosphoreux et un mélange d'acide phosphorique et d'acide sulfurique ou d'acide phosphoreux.

5. Procédé selon la revendication 4, caractérisé en ce que l'électrolyte aqueux contient de 10 à 200 g/l, en particulier de 20 à 150 g/l du ou des acides minéraux.

6. Procédé selon l'une quelconque des revendications 1 à 5, caractérisé en ce que, avant l'oxydation anodique dans l'électrolyte contenant un acide organique polymère, polybasique, on effectue en outre une oxydation anodique dans une solution aqueuse d'acide sulfurique comme électrolyte.

7. Procédé selon l'une quelconque des revendications 1 à 3 ou 6, caractérisé en ce que l'oxydation anodique est effectuée avec une tension de 1 à 30 V, à une densite de courant de 1 à 5 A/dm$^2$, pendant de 0,08 à 5 minutes et à une température de -2 à 60°C.

8. Procédé selon l'une quelconque des revendications 1 à 3, 6 ou 7, caractérisé en ce que l'oxydation anodique est effectuée avec une tension d'au moins 5 V, à une densite de courant de 1,3 à 4,3 A/dm$^2$, pendant de 0,16 à 1 minute et à une temperature de 10 à 35°C.

9. Procédé selon l'une des revendications 4 et 5, caractérisé en ce que l'oxydation anodique est effectuée avec une tension de 5 à 40 V, à une densité de courant de 0,2 à 6 A/dm$^2$, pendant de 0,08 à 5 minutes et à une temperature de -2° à 60°C.

10. Procédé selon l'une quelconque des revendications 1 à 9, caractérisé en ce qu'au moins un acide organique polymère, polybasique est un acide phosphonique polymère.

11. Procédé selon l'une quelconque des revendications 1 à 9, caractérisé en ce que comme acide orqanique polymère, polybasique d'acide phosphonique ou d'acide carboxylique, on utilise des copolymères hydrolysés d'éther méthylvinylique et d'anhydride maléique, des copolymères d'éther methylvinylique et d'acide maléique, l'acide polyvinlyl-phosphonique, l'acide poly-2-éthyl-hexane-phosphonique, l'acide polyacrylique, l'acide polyméthacrylique, ou un mélange de deux ou plusieurs de ces acides organiques.

12. Procédé selon l'une quelconque des revendications 1 à 11, caractérisé en ce qu au moins un acide organique polymère, polybasique, est l'acide polyvinylphosphonique.

13. Utilisation du matériau de support fabriqué selon l'une quelconque des revendicaitons 1 à 12, pour la fabrication de plaques d'impression portant une couche sensible à la lumière.

14. Utilisation selon la revendication 13, caractérisée en ce que les couches sensibles à la lumière, éventuellement colorées, contiennent des composés diazoïques, des diazoquinones, des produits de co-condensation diazoïques ou des composés photopolymérisables.